# EUROPEAN PATENT SPECIFICATION

(11) **EP 4 571 590 B1**
(45) Date of publication and mention of the grant of the patent: **07.10.2026**
(21) Application number: 24217427.4
(22) Date of filing: 04.12.2024
(51) Int. Cl.: G06N 3/09, G06N 5/045, G06N 20/10

(54) **ANALYSIS APPARATUS, ANALYSIS METHOD, AND ANALYSIS PROGRAM**
ANALYSEVORRICHTUNG, ANALYSEVERFAHREN UND ANALYSEPROGRAMM
APPAREIL D'ANALYSE, PROCÉDÉ D'ANALYSE ET PROGRAMME D'ANALYSE

(30) Priority: 11.12.2023 JP 2023208748
(43) Date of publication of application: 18.06.2025
(73) Proprietor: Yokogawa Electric Corporation, Tokyo 180-8750 (JP)
(72) Inventor: LIN, Yanyan, Musashino-shi, Tokyo 180-8750, (JP); IKEYA, Yuta, Musashino-shi, Tokyo 180-8750, (JP)
(74) Representative: Winter, Brandl - Partnerschaft mbB

(56) References cited:
- US-A1- 2023 362 180
- GIURGIU IOANA IGI@ZURICH IBM COM ET AL: "Additive Explanations for Anomalies Detected from Multivariate Temporal Data", PROCEEDINGS OF THE 28TH ACM JOINT MEETING ON EUROPEAN SOFTWARE ENGINEERING CONFERENCE AND SYMPOSIUM ON THE FOUNDATIONS OF SOFTWARE ENGINEERING, ACM, NEW YORK, NY, USA, 3 November 2019 (2019-11-03), pages 2245 - 2248, XP058639578, ISBN: 978-1-4503-7043-1, DOI: 10.1145/3357384.3358121
- LUCAS COSTA BRITO ET AL: "An Explainable Artificial Intelligence Approach for Unsupervised Fault Detection and Diagnosis in Rotating Machinery", ARXIV.ORG, CORNELL UNIVERSITY LIBRARY, 201 OLIN LIBRARY CORNELL UNIVERSITY ITHACA, NY 14853, 23 February 2021 (2021-02-23), XP081891018

## Description

### BACKGROUND OF THE INVENTION

### FIELD

The present invention relates to an analysis apparatus, an analysis method, and an analysis program.

### BACKGROUND

There is a conventional technology of performing factor analysis on data by using a prediction model.

Non-Patent Document 1: Iori Oki, Takahiro Nishigaki, Takashi Onoda, "Factor Estimation Using SHAP for Outlier Detection Models for Merchant Marine Onboard Equipment", Japan Society for Management Information Secretariat 2022 National Research, November 12, 2022

However, in the above described conventional technology, there is a problem in that reliability of the factor analysis decreases when the accuracy of the prediction model has decreased.

For example, SHAP is a technique for calculating a level of contribution of a feature value on the basis of abnormal data that is output from a prediction model, and the accuracy of the Shapley value accordingly depends on the accuracy of the prediction model.

Document US2023/362180 A1 discloses an analysis apparatus comprising: a detection unit that detects abnormal data by inputting data acquired from a target system to a first prediction model that has been subjected to unsupervised learning based on pre-existing data acquired during normal operation of the target system; a supervised learning unit that performs supervised learning on a second prediction model; an estimation unit that estimates the first prediction model by inputting, to the second prediction model, data that is the same as the data that has been input to the first prediction model; and a retraining unit that performs supervised learning once again on the second prediction model based on an estimation result obtained by the estimation unit.

The publication by GIURGIU IOANA IGI@ZURICH IBM COM ET AL: "Additive Explanations for Anomalies Detected from Multivariate Temporal Data", 3 November 2019, describes detecting anomalies from high-dimensional multivariate temporal data and validating the anomalies detected. There is described to extend SHAP - a unified framework for providing additive explanations, previously applied for supervised models - with influence weighting, in order to explain anomalies detected from multivariate time series with a GRU-based auto-encoder. Namely, there are extracted the signals that contribute most to an anomaly and those that counteract it.

The publication by LUCAS COSTA BRITO ET AL: "An Explainable Artificial Intelligence Approach for Unsupervised Fault Detection and Diagnosis in Rotating Machinery", 23 February 2021, describes a method for fault detection and diagnosis in rotating machinery. The method consists of three parts: feature extraction , fault detection and fault diagnosis. In the first part , the vibration features in the time and frequency domains are extracted. Secondly, in the fault detection , the presence of fault is verified in an unsupervised manner based on anomaly detection algorithms. Finally, in fault diagnosis, Shapley Additive Explanations (SHAP), a technique to interpret black-box models, is used.

Accordingly, the present invention has been conceived in light of the circumstances described above and an object thereof is to provide an analysis apparatus, an analysis method, and an analysis program capable of improving reliability of a factor analysis performed on data. The object is solved by the features of the independent claims. The dependent claims are directed to preferred embodiments of the invention.

The invention is set forth in the independent claims and further embodiments are defined in the dependent claims.

### BRIEF DESCRIPTION OF THE DRAWINGS

FIG. 1 is a diagram (1) for explaining a factor analysis (SHAP);
FIG. 2 is a diagram (2) for explaining a factor analysis (SHAP);
FIG. 3 is a diagram (3) for explaining a factor analysis (SHAP);
FIG. 4 is a diagram for explaining a process performed by an analysis apparatus according to a first embodiment;
FIG. 5 is a diagram illustrating one example of a data structure of a training data set according to the first embodiment;
FIG. 6 is a diagram illustrating one example of a determination result of process data acquired in real time;
FIG. 7 is a diagram for explaining an estimation of a first prediction model;
FIG. 8 is a functional block diagram illustrating a functional configuration of an analysis apparatus according to the first embodiment;
FIG. 9 is a flowchart illustrating a process performed by the analysis apparatus according to the first embodiment;
FIG. 10 is a diagram for explaining a process performed by an analysis apparatus according to a second embodiment;
FIG. 11 is a functional block diagram illustrating a functional configuration of an analysis apparatus according to the second embodiment;
FIG. 12 is a flowchart illustrating a process performed by the analysis apparatus according to the second embodiment;
FIG. 13 is a diagram for explaining a process performed by an analysis apparatus according to a third embodiment;
FIG. 14 is a functional block diagram illustrating a functional configuration of an analysis apparatus according to the third embodiment;
FIG. 15 is a flowchart illustrating a process performed by the analysis apparatus according to the third embodiment;
FIG. 16 is a diagram for explaining a process performed by an analysis apparatus according to a fourth embodiment;
FIG. 17 one example a determination policy of the analysis apparatus according to the fourth embodiment;
FIG. 18 is a diagram illustrating one example of a determination result of the process data acquired in real time and a plant KPI;
FIG. 19 is a functional block diagram illustrating a functional configuration of an analysis apparatus according to the fourth embodiment;
FIG. 20 is a flowchart illustrating a process performed by the analysis apparatus according to the fourth embodiment;
FIG. 21 is a diagram for explaining an example of a hardware configuration; and
FIG. 22 is a diagram for explaining a conventional technology.

### DETAILED DESCRIPTION OF THE PREFERRED EMBODIMENTS

Preferred embodiments of an analysis apparatus, an analysis method, and an analysis program disclosed in the present application will be described in detail below with reference to the accompanying drawings. In addition, the same components are denoted by the same reference numerals and an overlapping description will be omitted.

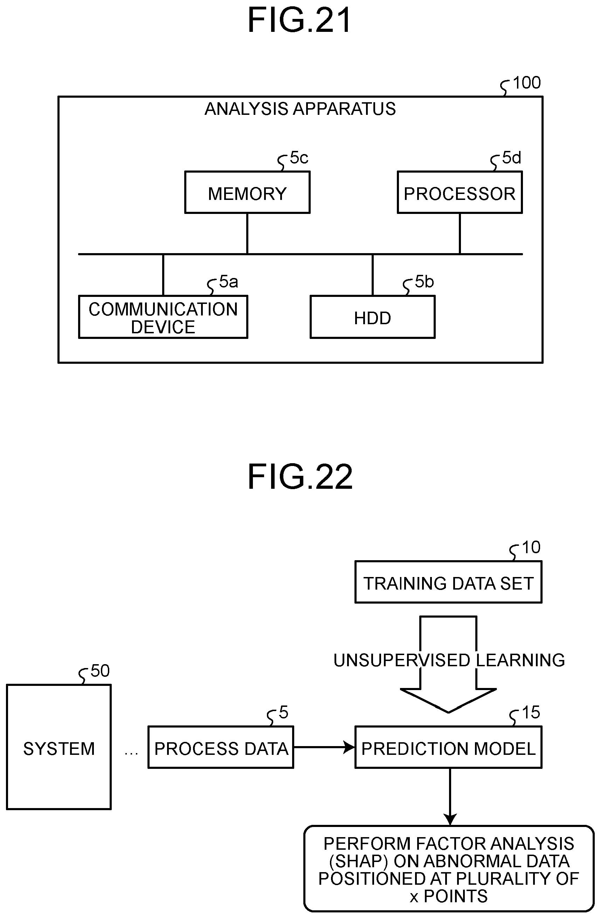

First, a conventional technology will be described, and then, embodiments of the present application will be described. **In** the following description, a device that performs the conventional technology is referred to as a "conventional apparatus". FIG. 22 is a diagram for explaining the conventional technology. First, in the conventional technology, a training data set 10 is prepared in advance. **In** the training data set 10, a plurality of pieces of process data collected in a period of time in which abnormality does not occur in a system to be monitored are registered. For example, a feature value is set in the process data for each of a plurality of items. For example, in a case where the system to be monitored is a plant, the process data includes a pressure, a temperature, a flow rate, an operation state, and the like.

The conventional apparatus performs unsupervised learning on a prediction model 15 on the basis of the training data set 10. The prediction model 15 is, for example, One Class Support Vector Machine (SVM), or the like.

The conventional apparatus performs the following process after having completed the unsupervised learning performed on the prediction model 15. The conventional apparatus performs abnormality determination by inputting, to the prediction model 15, process data 5 that is received in real time from a system 50 corresponding to a monitored target. **In** the following description, the process data 5 that has been determined to be abnormal is referred to as "abnormal data". **In** the following, a description will be given of a case in which the conventional apparatus repeatedly performs abnormality determination every time the conventional apparatus receives the process data 5, and detects pieces of abnormal data positioned at a plurality of x points.

The conventional apparatus performs a factor analysis on the abnormal data positioned at the plurality of x points. For example, the conventional apparatus performs, as the factor analysis, shapley additive explanations (SHAP), and calculates a Shapley value with respect to each of the feature values of the abnormal data. The Shapley value is a value indicating the degree of contribution of the feature value of the abnormal data to a prediction value that is obtained by inputting data to the prediction model 15. For example, in a case where the Shapley value with respect to the feature value of a pressure is larger than the Shapley value of another feature value from among the plurality of feature values included in the abnormal data, it can be said that the factor of abnormality is a pressure.

### First Embodiment

### Factor analysis

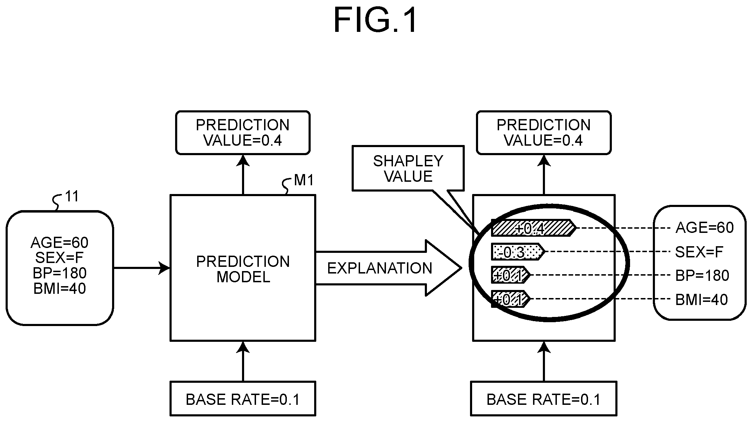

Before a first embodiment is described, one example of a factor analysis (SHAP) will be described. FIG. 1 is a diagram (1) for explaining a factor analysis (SHAP). In the example illustrated in FIG. 1, a description will be given by using data 11 corresponding to a single record and using a prediction model M1. In the data 11, a pair of a feature and a feature value is set.

For example, in the data 11, Age, SEX, a Blood Pressure (BP), and a Body Mass Index (BMI) are set as the respective features. The feature value of the feature "Age" is "60". The feature value of the feature "Sex" is a "Female (F)". The feature value of the feature "BP" is "180". The feature value of the feature "BMI" is "40". Furthermore, the feature value of the feature "Sex" may also be denoted by 1 (Female) or 0 (Male).

The prediction model M1 is a trained model obtained by performing unsupervised learning, and outputs a prediction value when data is input. In a case where the prediction value is equal to or greater than a threshold, it is determined that the input data is normal data. In contrast, in a case where the prediction value is less than the threshold, it is determined that the input data is abnormal data. A Base rate is one of parameters for the prediction model M1, and the abnormal data is likely to be detected as the Base rate is greater. For example, the Base rate is set to "0.1".

In the example illustrated in FIG. 1, in a case where the data 11 is input to the prediction model M1, the prediction value indicates "0.4". For example, if the threshold that is set in advance is "0.5", the data 11 is determined to be abnormal data.

If a factor analysis using SHAP is performed by using both of the data 11 and the prediction model M1, a Shapley value corresponding to each of the features is calculated. For example, a process of calculating a prediction value is repeatedly performed by inputting the data 11, in which the feature value of each of the features has been changed, to the prediction model M1, and then, a change in the value of the feature value with respect to the change in the prediction value is calculated as a Shapley value. In the example illustrated in FIG. 1, the Shapley value with respect to the feature "Age" is "+ 0.4". The Shapley value with respect to the feature "Sex" is "- 0.3". The Shapley value with respect to the feature "BP" is "+ 0.1". The Shapley value with respect to the feature "BMI" is "+ 0.1".

From the calculation result of the Shapley values illustrated in FIG. 1, it is found that the feature "Age" has the most influence on the prediction value that is output from the prediction model M1, and the feature "Sex" has the second influence on the prediction value that is output from the prediction model M1.

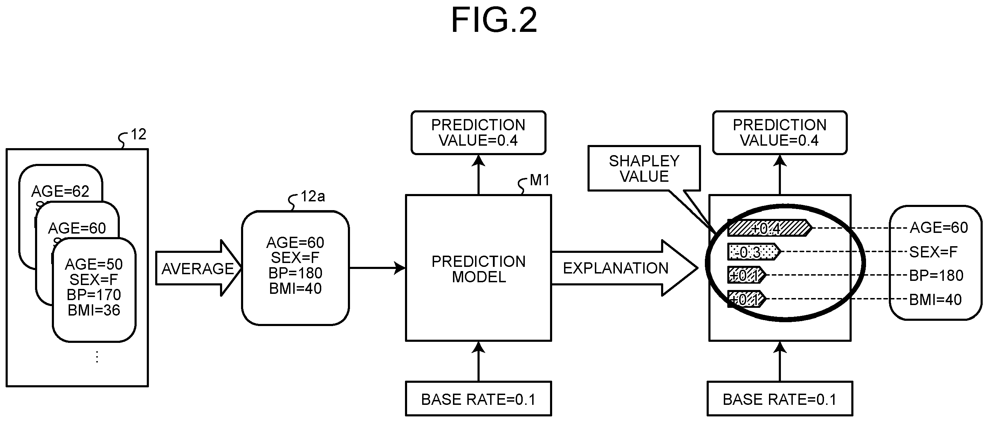

FIG. 2 is a diagram (2) for explaining a factor analysis (SHAP). In the example illustrated in FIG. 2, a description will be given by using data 12 that includes a plurality of records and using the prediction model M1. The description of the prediction model M1 is the same as that of the prediction model M1 described above with reference to FIG. 1.

In each of the records included in the data 12, a combination of a feature and a feature value is set. Descriptions related to the respective features are the same as those described above with reference to FIG. 1. Descriptions of the feature values of the respective features will be omitted. For example, data 12a is calculated by calculating the average value of the feature values for each of the feature values set in the corresponding record included in the data 12.

In the data 12a, an average value "60" of the feature values of the feature "Age", an average value "F" of the feature values of the feature "Sex", an average value "180" of the feature values of the feature "BP", and an average value "40" of the feature values of the feature "BMI" are set.

In the example illustrated in FIG. 1, in a case where the data 12a is input to the prediction model M1, the prediction value indicates "0.4". For example, if the threshold that is set in advance is "0.5", the data 12a is determined to be abnormal data.

If a factor analysis using SHAP is performed by using both of the data 12a and the prediction model M1, a Shapley value corresponding to each of the features is calculated. In the example illustrated in FIG. 2, the Shapley value with respect to the feature "Age" is "+ 0.4". The Shapley value with respect to the feature "Sex" is "- 0.3". The Shapley value with respect to the feature "BP" is "+ 0.1". The Shapley value with respect to the feature "BMI" is "+ 0.1".

From the calculation result of the Shapley values illustrated in FIG. 2, it is found that feature "Age" has the most influence on the prediction value obtained from the prediction model M1, and the feature "Sex" has the second influence on the prediction value.

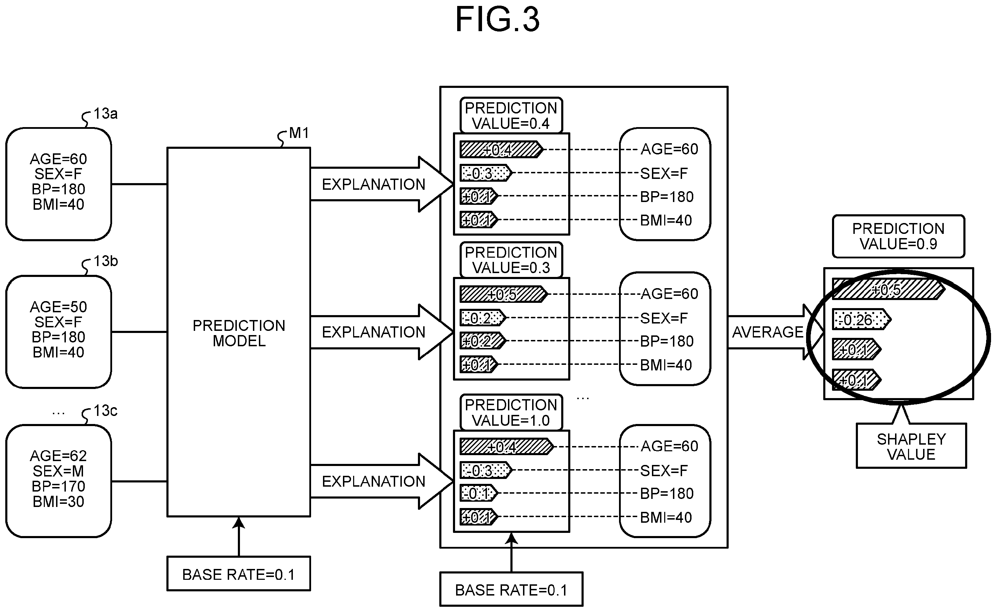

FIG. 3 is a diagram (3) for explaining a factor analysis (SHAP). In the example illustrated in FIG. 3, a description will be given by using a plurality of pieces of data 13a, 13b, and 13c and the prediction model M1. The description of the prediction model M1 is the same as that of the prediction model M1 described above with reference to FIG. 1.

In each of the data 13a, 13b, and 13c, a combination of a feature and a feature value is set. A description related to the feature is the same as that described above with reference to FIG. 1. Regarding the data 13a, the feature value of the feature "Age" is "60". The feature value of the feature "Sex" is "F". The feature value of the feature "BP" is "180". The feature value of the feature "BMI" is "40".

Regarding the data 13b, the feature value of the feature "Age" is "50". The feature value of the feature "Sex" is "F". The feature value of the feature "BP" is "170". The feature value of the feature "BMI" is "36".

Regarding the data 13c, the feature value of the feature "Age" is "62". The feature value of the feature "Sex" is a "Male (M)". The feature value of the feature "BP" is "170". The feature value of the feature "BMI" is "30".

In the example illustrated in FIG. 3, in a case where the data 13a is input to the prediction model M1, the prediction value indicates "0.4". In a case where the data 13b is input to the prediction model M1, the prediction value indicates "0.3". In a case where the data 13c is input to the prediction model M1, the prediction value indicates "0.1". For example, if the threshold that is set in advance is "0.5", the data 13a, 13b, and 13c are determined to be abnormal data.

If a factor analysis using SHAP is performed by using both of the data 13a and the prediction model M1, a Shapley value corresponding to each of the features is calculated. In the example illustrated in FIG. 3, the Shapley value with respect to the feature "Age" is "+ 0.4". The Shapley value with respect to the feature "Sex" is "- 0.3". The Shapley value with respect to the feature "BP" is "+ 0.1". The Shapley value with respect to the feature "BMI" is "+ 0.1".

If a factor analysis using SHAP is performed by using both of the data 13b and the prediction model M1, a Shapley value corresponding to each of the features is calculated. In the example illustrated in FIG. 3, the Shapley value with respect to the feature "Age" is "+ 0.5". The Shapley value with respect to the feature "Sex" is "- 0.2". The Shapley value with respect to the feature "BP" is "+ 0.2". The Shapley value with respect to the feature "BMI" is "+ 0.1".

If a factor analysis using SHAP is performed by using both of the data 13c and the prediction model M1, a Shapley value corresponding to each of the features is calculated. In the example illustrated in FIG. 3, the Shapley value with respect to the feature "Age" is "+ 0.6". The Shapley value with respect to the feature "Sex" is "- 0.3". The Shapley value with respect to the feature "BP" is "- 0.1". The Shapley value with respect to the feature "BMI" is "+ 0.1".

The average value of the Shapley values with respect to the corresponding features is as follows. The average value of the Shapley values with respect to the feature "Age" is "+ 0.5". The average value of the Shapley values with respect to the feature "Sex" is "- 0.28". The average value of the Shapley values with respect to the feature "BP" is "+ 0.1". The average value of the Shapley values with respect to the feature "BMI" is "+ 0.1".

From the calculation result of the Shapley value (average value) illustrated in FIG. 3, it is found that feature "Age" has the most influence on the prediction value obtained from the prediction model M1, and the feature "Sex" has the second influence on the prediction value.

In the above, one example of the factor analysis (SHAP) has been described. In the example illustrated in FIG. 1 to FIG. 3, the features have been described by using Age, SEX, BP, and BMI, but it is also possible to perform a factor analysis in a similar manner even if a feature value of another feature is used. An example of a feature value of the other feature according to the present invention includes a feature value of a pressure, a temperature, a flow rate, or an operation state that is set to process data related to a plant.

### Description of process performed by analysis apparatus 100

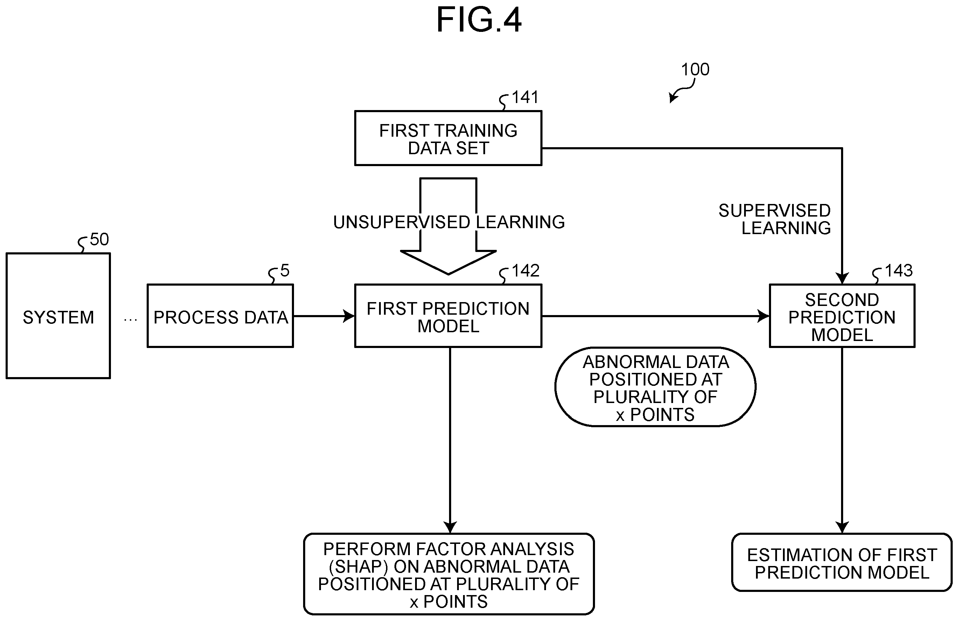

In the following, one example of a process performed by an analysis apparatus 100 according to the first embodiment will be described. FIG. 4 is a diagram for explaining a process performed by the analysis apparatus 100 according to the first embodiment. For example, the analysis apparatus 100 is connected to the system 50 that is a monitored target.

The system 50 is a system that manages a plant, and outputs, to the analysis apparatus 100, process data 5 related to a plurality of field devices included in the plant at predetermined time intervals. The analysis apparatus 100 performs unsupervised learning, a factor analysis, supervised learning, an estimation of the first prediction model, and a retrain of unsupervised learning that will be described below on the basis of the process data 5.

### Unsupervised learning according to the first embodiment

The unsupervised learning performed by the analysis apparatus 100 will be described. In the first embodiment, a first training data set 141 is prepared in advance. In the first training data set 141, a plurality of pieces of process data that have been collected in a period of time in which abnormality does not occur in the system 50 are registered. The first training data set 141 is used when unsupervised learning is performed on the first prediction model 142. The first prediction model 142 is a One Class SVM, or the like.

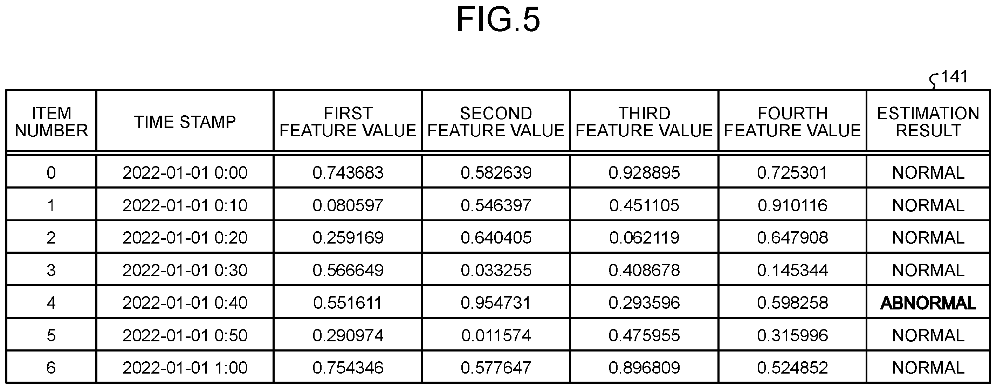

FIG. 5 is a diagram illustrating one example of a data structure of a training data set according to the first embodiment. As illustrated in FIG. 5, the first training data set 141 includes an item number, a time stamp, a first feature, a second feature, a third feature, a fourth feature, and an estimation result. The item number is the number for identifying the process data included in the first training data set 141. The time stamp is the time at which the corresponding process data is measured. Each of a first feature value, a second feature value, a third feature value, and a fourth feature value indicates a feature value of each of the features of the plant.

The estimation result indicates an estimation result obtained when the corresponding process data is input to the first prediction model 142 that has been subject to unsupervised learning. In a case where a prediction value indicated when the process data is input to the first prediction model 142 is equal to or greater than a threshold, the estimation result indicates "normal". In a case where a prediction value indicated when the process data is input to the first prediction model 142 is less than the threshold, the estimation result indicates "abnormality". In the first embodiment, the estimation result does not have to be included in the first training data set 141.

Furthermore, from among the pieces of information illustrated in the first training data set 141, a combination of the first feature value, the second feature value, the third feature value, and the fourth feature value that are included in a single record is used as a single piece of training data.

The analysis apparatus 100 performs unsupervised learning on the first prediction model 142 on the basis of the first training data set 141. A plurality of pieces of process data (training data) collected in a period of time in which abnormality does not occur in the system 50 have been registered in the first training data set 141, so that a distribution of the feature values of the pieces of process data obtained at normal time is trained by performing unsupervised learning by the analysis apparatus 100.

### Factor analysis according to the first embodiment

The analysis apparatus 100 performs the factor analysis by using the first prediction model 142 after having completed the unsupervised learning performed on the first prediction model 142. For example, the analysis apparatus 100 inputs the process data acquired from the system 50 in real time to the first prediction model 142, and consequently determines whether the input process data is normal data or abnormal data.

In a case where the prediction value indicated when the process data is input to the first prediction model 142 is equal to or greater than the threshold that is set in advance, the analysis apparatus 100 determines that the process data is normal data. In contrast, in a case where the prediction value indicated when the process data is input to the first prediction model 142 is less than the threshold that is set in advance, the analysis apparatus 100 determines that the process data is abnormal data. The analysis apparatus 100 repeatedly performs the above described process until the analysis apparatus 100 detects abnormal data positioned at a plurality of x points.

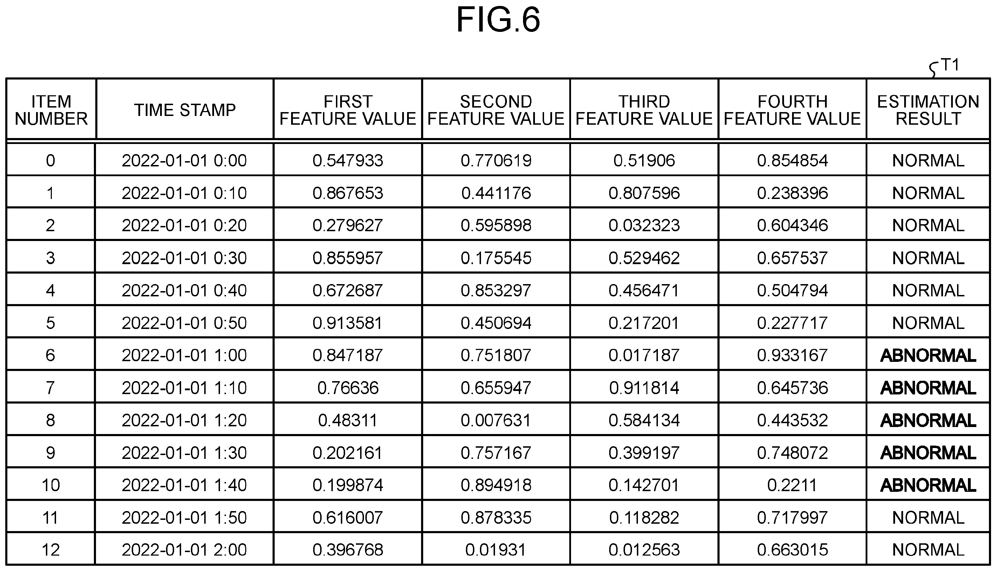

FIG. 6 is a diagram illustrating one example of a determination result of the process data acquired in real time. As illustrated in FIG. 6, in an estimation result table T1, the item number, the time stamp, the first feature, the second feature, the third feature, the fourth feature, and the estimation result are included. Descriptions of the item number, the time stamp, the first to the fourth feature values, and the estimation result are the same as those of the item number, the time stamp, the first to the fourth feature values, and the estimation result described above with reference to FIG. 5. In the example illustrated in FIG. 6, the pieces of process data corresponding to the item numbers 0 to 5, 11, and 12 are determined to be normal data. The pieces of process data corresponding to the item numbers 6 to 10 are determined to be abnormal data.

The analysis apparatus 100 performs a factor analysis on each of the pieces of abnormal data positioned at the plurality of x points. The factor analysis performed by the analysis apparatus 100 is the same as the factor analysis described above with reference to FIG. 1 to FIG. 3. The analysis apparatus 100 outputs a result of the factor analysis.

The analysis apparatus 100 uses the abnormal data positioned at the plurality of x points in the supervised learning that will be described below.

### Supervised learning according to the first embodiment

The analysis apparatus 100 uses the first training data set 141, which has been used for the unsupervised learning performed on the first prediction model 142, as "normal data" for the supervised learning to be performed on a second prediction model 143. The analysis apparatus 100 uses the pieces of abnormal data, which are positioned at the plurality of x points detected when the above described factor analysis is performed, as "abnormal data" for the supervised learning to be performed on the second prediction model 143.

For example, the analysis apparatus 100 prepares the second training data set for performing the supervised learning by performing the following process. In FIG. 4, an illustration of a diagram of the second training data set is omitted. The analysis apparatus 100 assigns a label "1 (normal)" to the process data that is included in the first training data set 141. The analysis apparatus 100 assigns a label "0 (abnormality)" to each of the pieces of abnormal data positioned at the plurality of x points.

The analysis apparatus 100 registers the pieces of process data to each of which the label has been assigned in the second training data set. The analysis apparatus 100 uses the second training data set, and performs supervised learning on the second prediction model 143 on the basis of an error propagation technique, or the like. The second prediction model 143 is a neural network (NN), or the like.

For example, the analysis apparatus 100 inputs the input data (for example, a combination of the first feature value, the second feature value, the third feature value, and the fourth feature value) to the second prediction model 143, and updates the parameters for the second prediction model 143 such that the value output from the second prediction model 143 approaches the value of the label.

When the process data is input to the second prediction model 143 that has been subjected to the supervised learning, in a case where the prediction value of the second prediction model 143 is equal to or greater than the threshold, the input process data is "normal data". In contrast, when the process data is input to the second prediction model 143 that has been subjected to supervised learning, in a case where the prediction value of the second prediction model 143 is less than the threshold, the input process data is "abnormal data".

### Estimation of first prediction model according to the first embodiment

The analysis apparatus 100 performs an estimation of the first prediction model 142 by using the second prediction model 143 that has been subjected to the supervised learning. For example, the analysis apparatus 100 inputs the process data acquired from the system 50 in real time to both of the first prediction model 142 and the second prediction model 143, and obtains prediction results from the first prediction model 142 and the second prediction model 143. In a case where the prediction results of the first prediction model 142 and the second prediction model 143 are the same, the analysis apparatus 100 estimates that the performance of the first prediction model 142 does not decrease. In contrast, in a case where the prediction results of the first prediction model 142 and the second prediction model 143 are different, the analysis apparatus 100 estimates that the performance of the first prediction model 142 has decreased.

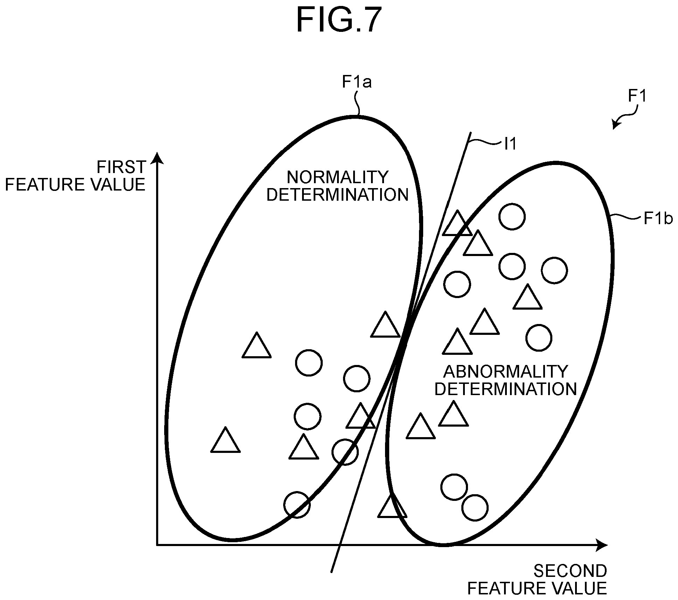

FIG. 7 is a diagram for explaining an estimation of the first prediction model. In the example illustrated in FIG. 7, as a convenience, a feature value space F1 is indicated by two axes, and the vertical axis is set to be the axis corresponding to the first feature value, whereas the horizontal axis is set to be the axis corresponding to the second feature value. In the feature value space F1, an area F1a located on the left side of a line 11 is an area that is determined to be normal data by the second prediction model 143. An area F1b located on the right side of the line l1 is an area is determined to be abnormal data by the second prediction model 143.

Circle marks and triangle marks that are plotted in the feature value space F1 correspond to the pieces of process data. Furthermore, the pieces of process data indicated by the circle marks are the pieces of process data that have been determined to be normal data by the first prediction model 142. The pieces of process data indicated by the triangle marks are the pieces of process data that have been determined to be abnormal data by the first prediction model 142.

In the example illustrated in FIG. 7, the pieces of triangle marked process data are included in the area F1a, and the pieces of circle marked process data are included in the area F1b. Accordingly, in a number of pieces of process data, the prediction results of the first prediction model 142 and the second prediction model 143 are different, the analysis apparatus 100 estimates that the performance of the first prediction model 142 has decreased.

Furthermore, the analysis apparatus 100 may estimate the first prediction model 142 by performing the following process. The analysis apparatus 100 inputs the process data acquired from the system 50 in real time to the first prediction model 142, and acquires the data that has been determined to be abnormal data by the first prediction model 142. The analysis apparatus 100 repeatedly performs the above described process and acquires the pieces of abnormal data positioned at the plurality of x points.

The analysis apparatus 100 inputs each of the pieces of abnormal data positioned at the plurality of x points to the second prediction model 143, and acquires a prediction result of the second prediction model 143. In a case where the second prediction model 143 determines that the pieces of abnormal data account for less than a predetermined percentage of the pieces of abnormal data positioned at the plurality of x points are normal data, the analysis apparatus 100 estimates that the performance of the first prediction model 142 does not decrease. In contrast, in a case where the second prediction model 143 determines that the pieces of abnormal data account for equal to or greater than the predetermined percentage of the pieces of abnormal data positioned at the plurality of x points are normal data, the analysis apparatus 100 estimates that the performance of the first prediction model 142 has decreased.

In a case where the performance of the first prediction model 142 decreases, the analysis apparatus 100 may performs the factor analysis by using the second prediction model 143.

### Retrain of unsupervised learning according to the first embodiment

In a case where the analysis apparatus 100 estimates that the performance of the first prediction model 142 has decreased, the analysis apparatus 100 performs the following process. The analysis apparatus 100 deletes old process data that has been registered in the first training data set 141. The analysis apparatus 100 determines whether or not abnormality occurs in the system 50 by inputting the process data output from the system 50 to the second prediction model 143. The analysis apparatus 100 newly registers the process data generated in a period of time in which abnormality does not occur in the system 50 into the first training data set 141.

The analysis apparatus 100 performs unsupervised learning once again on the first prediction model 142 by using the first training data set 141 in which process data is newly registered.

In the above, the unsupervised learning, the factor analysis, the supervised learning, the estimation of the first prediction model, and the retrain of the unsupervised learning that are performed by the analysis apparatus 100 have been described.

As described above, the analysis apparatus 100 according to the first embodiment performs the supervised learning on the second prediction model 143 by using the plurality of pieces of abnormal data that have been detected by the first prediction model 142, in which unsupervised learning has been performed, and using the first training data set 141 that has been acquired during normal operation of the system 50. The analysis apparatus 100 inputs, to the second prediction model 143, data that is the same as the data that has been input to the first prediction model 142, and then, estimates whether or not the performance of the first prediction model 142 has decreased on the basis of the prediction result of the first prediction model 142 and the prediction result of the second prediction model 143. In a case where the performance of the first prediction model 142 has decreased, the analysis apparatus 100 performs unsupervised learning once again on the first prediction model 142.

As a result of this, it is possible to detect a decrease in performance of the first prediction model 142 that is used when the factor analysis of data is performed and retrain the first prediction model 142 at an appropriate timing. Consequently, it is possible to improve the reliability of the factor analysis.

### Functional configuration of analysis apparatus 100 according to the first embodiment

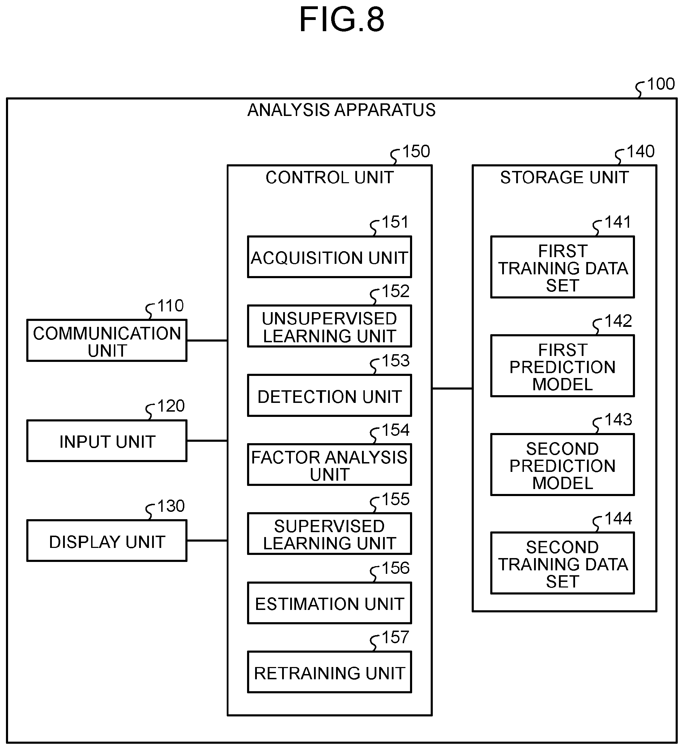

In the following, an example of a configuration of the analysis apparatus 100 illustrated in FIG. 4 will be described. FIG. 8 is a functional block diagram illustrating a functional configuration of the analysis apparatus according to the first embodiment. As illustrated in FIG. 8, the analysis apparatus 100 includes a communication unit 110, an input unit 120, a display unit 130, a storage unit 140, and a control unit 150. Furthermore, the functioning units included in the analysis apparatus 100 are not limited to those illustrated in FIG. 8, and another functioning unit may be included.

The communication unit 110 is a processing unit that controls communication with the system 50 corresponding to the monitored target or the other devices illustrated in FIG. 4, and is implemented by a communication interface or the like. For example, the communication unit 110 receives process data from the system 50.

The input unit 120 is a processing unit for inputting various kinds of information to the control unit 150 included in the analysis apparatus 100, and is implemented by a keyboard, a mouse, a touch panel, or the like.

The display unit 130 is a processing unit for displaying information that is output from the control unit 150, and is implemented by a display, or the like. For example, the display unit 130 displays a result of the factor analysis.

The storage unit 140 stores therein the first training data set 141, the first prediction model 142, the second prediction model 143, and a second training data set 144. The storage unit 140 is implemented by a memory, a hard disk, or the like.

The first training data set 141 includes pieces of process data collected in a period of time in which abnormality does not occur in the system 50. The other descriptions related to the first training data set 141 are the same as those related to the first training data set 141 described above with reference to FIG. 5, or the like.

The first prediction model 142 is a One Class SVM, or the like. The first prediction model 142 is subjected to unsupervised learning by an unsupervised learning unit 152 that will be described later on the basis of the first training data set 141.

The second prediction model 143 is a NN or the like. The second prediction model 143 is subjected to supervised learning by a supervised learning unit 155 that will be described later on the basis of the second training data set 144.

The second training data set 144 includes pieces of process data to which a plurality of labels are assigned, respectively. For example, the second training data set 144 includes information in which the label "1 (normal)" is assigned to the process data that is included in the first training data set 141 and information in which the label "0 (abnormality)" is assigned to the pieces of abnormal data positioned at the plurality of x points.

The control unit 150 is a processing unit that manages the entire of the analysis apparatus 100, and is implemented by, for example, a processor, or the like. The control unit 150 includes an acquisition unit 151, the unsupervised learning unit 152, a detection unit 153, a factor analysis unit 154, the supervised learning unit 155, an estimation unit 156, and a retraining unit 157.

The acquisition unit 151 is a processing unit that acquires process data from the system 50 in real time. The acquisition unit 151 outputs the acquired process data to the detection unit 153 and the estimation unit 156.

The acquisition unit 151 registers the process data acquired from the system 50 in a period of time in which abnormal data is not detected by the detection unit 153 that will be described later into the first training data set 141.

The acquisition unit 151 assigns the label "1 (normal)" to the process data that has been set in the first training data set 141, and registers the process data in the second training data set 144.

The unsupervised learning unit 152 performs unsupervised learning on the first prediction model 142 on the basis of the first training data set 141. In the first training data set 141, a plurality of pieces of process data (training data) collected in a period of time in which abnormality does not occur in the system 50 have been registered, so that the first prediction model 142 trains a distribution of the feature values of the process data obtained at normal time.

The process data is input to the first prediction model 142 that has been subjected to the unsupervised learning, and a prediction value corresponding to the distance between the feature value of the input process data and the feature value of the distribution of the process data obtained at normal time is output. The prediction value is greater as the distance between the feature value of the input process data and the feature value of the distribution of the process data at normal time is closer.

The other processes related to the unsupervised learning unit 152 are the same as those related to the unsupervised learning described above.

The detection unit 153 inputs the process data to the first prediction model 142 that has been subjected to the unsupervised learning, and determines whether the input process data is normal data or abnormal data on the basis of the prediction values. In a case where the prediction value is equal to or greater than the threshold that is set in advance (for example, 0.5), the detection unit 153 determines that the input process data is normal data. In contrast, in a case where the prediction value is less than the threshold that is set in advance, the detection unit 153 determines that the input process data is abnormal data.

The detection unit 153 repeatedly performs the above described process, and detects pieces of abnormal data positioned at the plurality of x points. The detection unit 153 outputs the abnormal data positioned at the plurality of x points to the factor analysis unit 154. Furthermore, the detection unit 153 assigns the label "0 (abnormality)" to the abnormal data (process data) positioned at the plurality of x points, and registers the abnormal data in the second training data set 144.

The detection unit 153 notifies the acquisition unit 151 of the period of time in which abnormal data is not detected (a period of time in which abnormality does not occur in the system 50).

The factor analysis unit 154 performs the factor analysis by using the abnormal data positioned at the plurality of x points and using the first prediction model 142 that has been subjected to the unsupervised learning. The factor analysis performed by the factor analysis unit 154 is the same as the factor analysis described above with reference to FIG. 1 to FIG. 3. The factor analysis unit 154 outputs the result of the factor analysis to the display unit 130, or the like.

The supervised learning unit 155 performs supervised learning on the second prediction model 143 on the basis of the second training data set 144 by using the error propagation technique, or the like. The other descriptions related to the supervised learning unit 155 are the same as those described above supervised learning according to the first embodiment.

The estimation unit 156 estimates the first prediction model 142 by using the second prediction model 143 that has been subjected to the supervised learning. For example, the estimation unit 156 inputs the process data acquired from the system 50 in real time to both of the first prediction model 142 and the second prediction model 143, and acquires prediction results from the first prediction model 142 and the second prediction model 143.

In a case where the prediction results obtained from the first prediction model 142 and the second prediction model 143 are the same, the estimation unit 156 estimates that the performance of the first prediction model 142 does not decrease. In contrast, in a case where the prediction results obtained from the first prediction model 142 and the second prediction model 143 are different, the estimation unit 156 estimates that the performance of the first prediction model 142 has decreased.

In a case where the estimation unit 156 estimates that the performance of the first prediction model 142 has decreased, the estimation unit 156 outputs a retraining request to the retraining unit 157. The other descriptions related to the estimation unit 156 are the same as those related to the estimation of the first prediction model according to the first embodiment described above.

In a case where the retraining unit 157 receives the retraining request from the estimation unit 156, the retraining unit 157 recognizes that the performance of the first prediction model 142 has decreased, and retrains the first prediction model 142. For example, the retraining unit 157 performs the following process.

The retraining unit 157 deletes the old process data registered in the first training data set 141, at the reception timing of the retraining request. After the retraining unit 157 has deleted the old process data registered in the first training data set 141, the retraining unit 157 waits until the process data obtained in a period of time in which abnormality does not occur in the system 50 is registered again in the first training data set 141 by the acquisition unit 151 described above.

After the process data obtained in a period of time in which abnormality does not occur in the system 50 has been registered again in the first training data set 141 by the acquisition unit 151, the retraining unit 157 performs unsupervised learning on the first prediction model 142 on the basis of the first training data set 141. The unsupervised learning performed by the retraining unit 157 is the same as the unsupervised learning performed by the unsupervised learning unit 152 described above.

Moreover, in FIG. 8, the unsupervised learning unit 152 and the retraining unit 157 have been described by using different blocks, but the unsupervised learning unit 152 may have the function of the retraining unit 157.

### Flow of process performed by analysis apparatus 100 according to the first embodiment

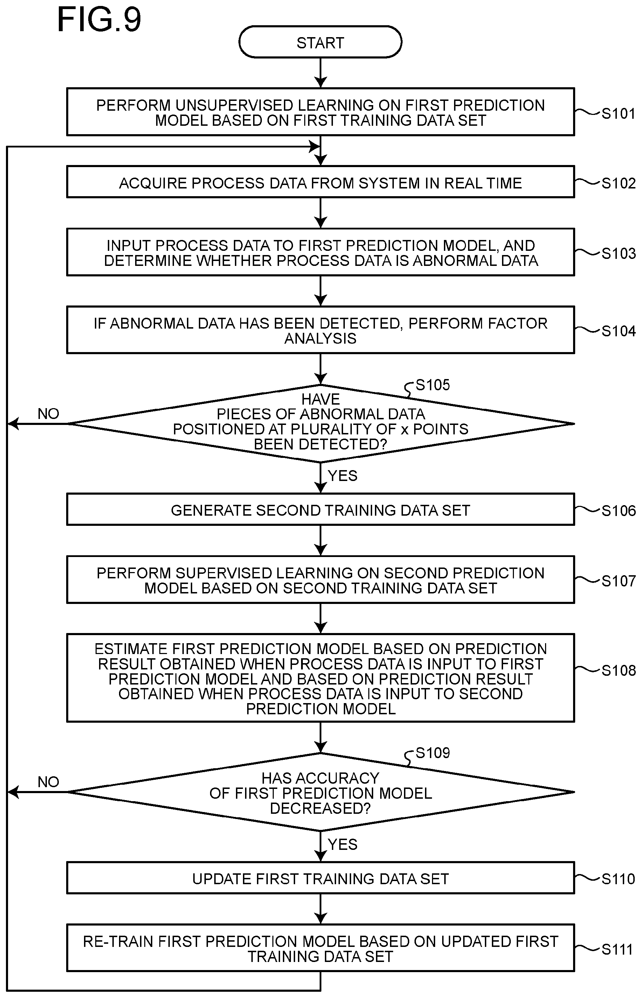

In the following, one example of the flow of the process performed by the analysis apparatus 100 according to the first embodiment will be described. FIG. 9 is a flowchart illustrating the flow of the process performed by the analysis apparatus 100 according to the first embodiment. As illustrated in FIG. 9, the unsupervised learning unit 152 included in the analysis apparatus 100 performs unsupervised learning on the first prediction model 142 on the basis of the first training data set 141 (Step S101).

The acquisition unit 151 included in the analysis apparatus 100 acquires process data from the system 50 in real time (Step S102). The detection unit 153 included in the analysis apparatus 100 inputs the process data to the first prediction model 142, and determines whether or not the process data is abnormal data (Step S103).

If abnormal data has been detected, the factor analysis unit 154 included in the analysis apparatus 100 performs the factor analysis (Step S104). If pieces of abnormal data positioned at the plurality of x points have not been detected (No at Step S105), the analysis apparatus 100 proceeds to Step S102. In contrast, if pieces of abnormal data positioned at the plurality of x points have been detected (Yes at Step S105), the analysis apparatus 100 proceeds to Step S106.

The analysis apparatus 100 generates the second training data set 144 (Step S106). The supervised learning unit 155 included in the analysis apparatus 100 performs supervised learning on the second prediction model 143 on the basis of the second training data set 144 (Step S107).

The estimation unit 156 included in the analysis apparatus 100 estimates the first prediction model 142 on the basis of the prediction result obtained when the process data is input to the first prediction model 142 and on the basis of the prediction result obtained when the process data is input to the second prediction model 143 (Step S108).

If the accuracy of the first prediction model does not decrease (No at Step S109), the analysis apparatus 100 proceeds to Step S102. In contrast, if the accuracy of the first prediction model has decreased (Yes at Step S109), the analysis apparatus 100 proceeds to Step S110.

The analysis apparatus 100 updates the first training data set 141 (Step S110). The retraining unit 157 included in the analysis apparatus 100 re-trains the first prediction model 142 (unsupervised learning) on the basis of the updated first training data set 141(Step S111), and proceeds to Step S102.

### Effect of the first embodiment

In the following, the effect of the analysis apparatus 100 according to the first embodiment will be described. As described above, the analysis apparatus 100 performs supervised learning on the second prediction model 143 by using the plurality of pieces of abnormal data detected by the first prediction model 142 that has been subjected to the unsupervised learning and using the first training data set 141 that has been acquired during normal operation of the system 50. The analysis apparatus 100 inputs, to the second prediction model 143, the data that is the same as the data that has been input to the first prediction model 142, and then, estimates whether or not the performance of the first prediction model 142 has decreased on the basis of the prediction result of the first prediction model 142 and the prediction result of the second prediction model 143. In a case where the performance of the first prediction model 142 has decreased, the analysis apparatus 100 performs the unsupervised learning once again on the first prediction model 142.

As a result of this, it is possible to detect a decrease in performance of the first prediction model 142 that is used when the factor analysis of data is performed and retrain the first prediction model 142 at an appropriate timing. Consequently, it is possible to improve the reliability of the factor analysis.

### Second Embodiment

### Description of process performed by analysis apparatus 200

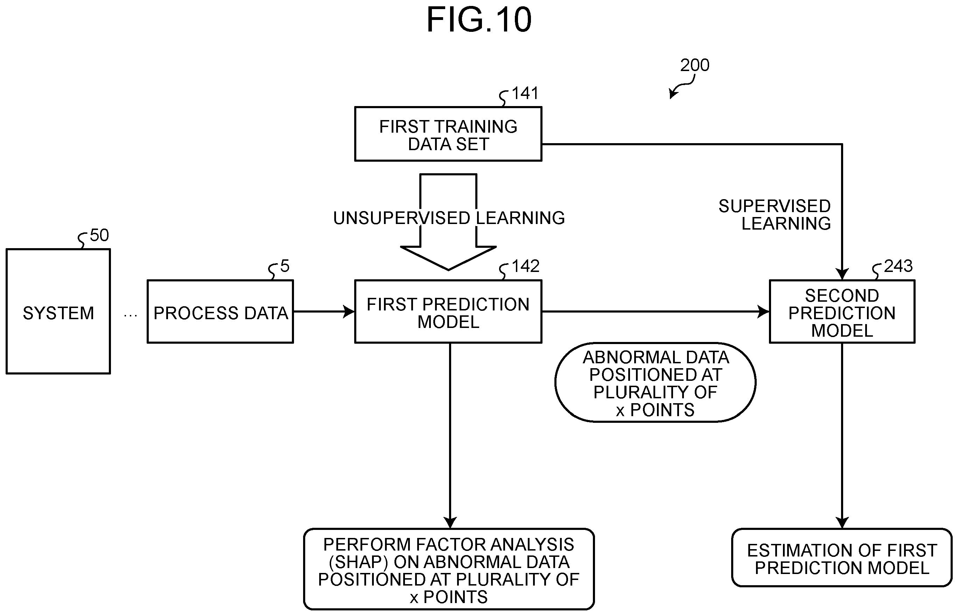

In the following, one example of a process performed by an analysis apparatus 200 according to the second embodiment will be described. FIG. 10 is a diagram for explaining a process performed by the analysis apparatus according to the second embodiment. For example, the analysis apparatus 200 is connected to the system 50 corresponding to the monitored target. Descriptions related to the system 50 are the same as those related to the system 50 described above with reference to FIG. 4.

The analysis apparatus 200 performs unsupervised learning, a factor analysis, supervised learning, and an estimation of the first prediction model, and a retrain of the unsupervised learning that will be described below on the basis of the process data 5.

### Unsupervised learning according to the second embodiment

The analysis apparatus 200 performs unsupervised learning on the first prediction model 142 on the basis of the first training data set 141. The unsupervised learning performed by the analysis apparatus 200 is the same as the unsupervised learning performed by the analysis apparatus 100 according to the first embodiment. Furthermore, descriptions related to the first training data set 141 and the first prediction model 142 are the same as those described above in the first embodiment.

### Factor analysis according to the second embodiment

The analysis apparatus 200 performs a factor analysis by using the first prediction model 142 after having performed unsupervised learning on the first prediction model 142. The factor analysis performed by the analysis apparatus 200 is the same as the factor analysis performed by the analysis apparatus 100 according to the first embodiment.

### Supervised learning according to the second embodiment

The analysis apparatus 200 uses, as "normal data" for the supervised learning performed on a second prediction model 243, the process data indicated as "normal" by the estimation result, from among the pieces of process data included in the first training data set 141 used for the unsupervised learning performed on the first prediction model 142. For example, in the process data illustrated in FIG. 5, the analysis apparatus 200 uses the process data indicated by the item numbers 0 to 3, 5, and 6 as "normal data" for the supervised learning to be performed on the second prediction model 243. Furthermore, the analysis apparatus 200 uses the pieces of abnormal data positioned at the plurality of x points detected at the time of the above described factor analysis as the "abnormal data" for the supervised learning to be performed on the second prediction model 243.

For example, the analysis apparatus 200 prepares the second training data set that is used to perform the supervised learning. In FIG. 10, an illustration of a diagram of the second training data set is omitted. The analysis apparatus 200 assigns the label "1 (normal)" to the normal data included in the first training data set 141. The analysis apparatus 200 assigns the label "0 (abnormality)" to the pieces of abnormal data positioned at the plurality of x points.

The analysis apparatus 200 registers the pieces of process data to each of which the label has been assigned in the second training data set. The analysis apparatus 200 uses the second training data set, and performs supervised learning on the second prediction model 243 on the basis of the error propagation technique, or the like. The second prediction model 243 is a NN, or the like.

For example, the analysis apparatus 200 inputs the input data (for example, a combination of the first feature value, the second feature value, the third feature value, and the fourth feature value) to the second prediction model 243, and updates the parameters for the second prediction model 243 such that the value output from the second prediction model 243 approaches the value of the label.

### Estimation of first prediction model according to the second embodiment

The analysis apparatus 200 performs an estimation of the first prediction model 142 by using the second prediction model 243 that has been subjected to the supervised learning. For example, the analysis apparatus 200 inputs the process data acquired from the system 50 in real time to both of the first prediction model 142 and the second prediction model 243, and obtains prediction results from the first prediction model 142 and the second prediction model 243. In a case where the prediction results of the first prediction model 142 and the second prediction model 243 are the same, the analysis apparatus 200 estimates that the performance of the first prediction model 142 does not decrease. In contrast, in a case where the prediction results of the first prediction model 142 and the second prediction model 243 are different, the analysis apparatus 200 estimates that the performance of the first prediction model 142 has decreased.

Moreover, the analysis apparatus 200 may perform an estimation of the first prediction model 142 by performing the following process. The analysis apparatus 200 inputs the process data acquired from the system 50 in real time to the first prediction model 142, and acquires the data that is determined to be abnormal data by the first prediction model 142. The analysis apparatus 200 repeatedly performs the above described process, and acquires the pieces of abnormal data positioned at the plurality of x points.

The analysis apparatus 200 inputs each of the pieces of abnormal data positioned at the plurality of x points to the second prediction model 243, and acquires the prediction result of the second prediction model 243. **In** a case where the second prediction model 243 determines that the pieces of abnormal data account for less than a predetermined percentage of the pieces of abnormal data positioned at the plurality of x points are normal data, the analysis apparatus 200 estimates that the performance of the first prediction model 142 does not decrease. **In** contrast, in a case where the second prediction model 243 determines that the pieces of abnormal data account for equal to or greater than the predetermined percentage of the pieces of abnormal data positioned at the plurality of x points are normal data, the analysis apparatus 200 estimates that the performance of the first prediction model 142 has decreased.

In a case where the performance of the first prediction model 142 has decreased, the analysis apparatus 200 may perform the factor analysis by using the second prediction model 243.

### Retrain of unsupervised learning according to the second embodiment

In a case where the analysis apparatus 200 estimates that the performance of the first prediction model 142 has decreased, the analysis apparatus 200 performs the following process. The analysis apparatus 200 deletes the old process data that has been registered in the first training data set 141. The analysis apparatus 200 determines whether or not abnormality occurs in the system 50 by inputting the process data output from the system 50 to the second prediction model 243. The analysis apparatus 200 newly registers the process data obtained in a period of time in which abnormality does not occur in the system 50 into the first training data set 141.

The analysis apparatus 200 uses the first training data set 141 in which the process data has been newly registered, and performs the unsupervised learning once again on the first prediction model 142.

In the above, the unsupervised learning, the factor analysis, the supervised learning, the estimation of the first prediction model, and the retrain of the unsupervised learning that are performed by the analysis apparatus 200 have been described.

In the analysis apparatus 100 according to the first embodiment described above, the supervised learning is performed on the second prediction model 143 by using the plurality of pieces of process data that are collected in the period of time in which abnormality does not occur in the system 50 as the normal data instead of using the estimation results. In contrast, in the analysis apparatus 200 according to the second embodiment, the supervised learning is performed on the second prediction model 243 by using a plurality of pieces of process data that are collected in a period of time in which abnormality does not occur in the system 50 and that are indicated as "normal" by the estimation result as the normal data.

As a result of this, the supervised learning is performed by using the pieces of normal data that are obtained by removing the abnormal data from the training data (process data), so that it is possible to enhance prediction accuracy of the second prediction model 243 as compared with the second prediction model 143 according to the first embodiment.

### Functional configuration of analysis apparatus 200 according to the second embodiment

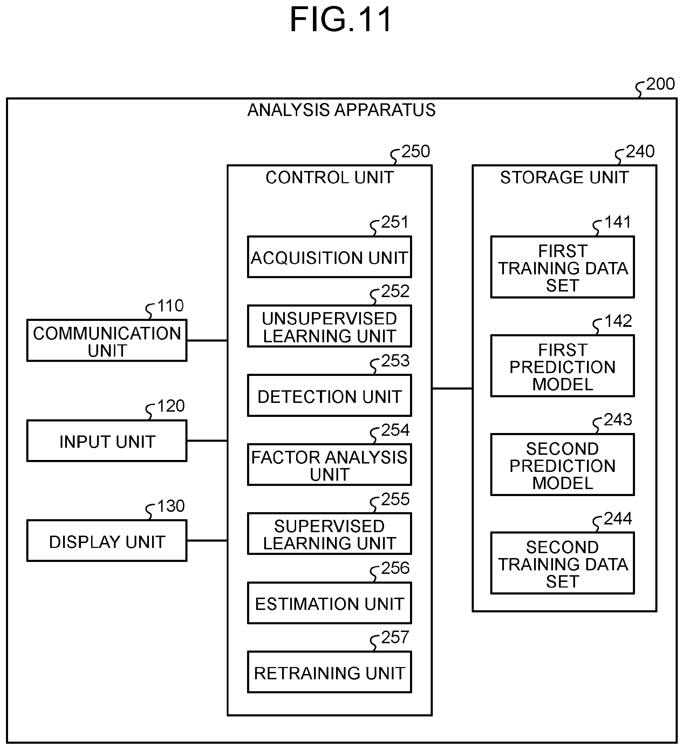

In the following, an example of a configuration of the analysis apparatus 200 illustrated in FIG. 10 will be described. FIG. 11 is a functional block diagram illustrating the functional configuration of the analysis apparatus according to the second embodiment. As illustrated in FIG. 11, the analysis apparatus 200 includes the communication unit 110, the input unit 120, the display unit 130, a storage unit 240, and a control unit 250. Furthermore, the functioning units included in the analysis apparatus 200 are not limited to those illustrated in FIG. 11, and another functioning unit may be included.

Descriptions related to the communication unit 110, the input unit 120, and the display unit 130 are the same as those related to the communication unit 110, the input unit 120, and the display unit 130 described above with reference to FIG. 8.

The storage unit 240 stores therein the first training data set 141, the first prediction model 142, the second prediction model 243, and a second training data set 244. The storage unit 240 is implemented by a memory, a hard disk, or the like.

The first training data set 141 includes pieces of process data that are collected in a period of time in which abnormality does not occur in the system 50. The other descriptions related to the first training data set 141 are the same as the descriptions related to the first training data set 141 described above with reference to FIG. 5, or the like.

The first prediction model 142 is a One Class SVM, or the like. The first prediction model 142 is subjected to unsupervised learning by an unsupervised learning unit 252 that will be described later on the basis of the first training data set 141.

The second prediction model 243 is a NN, or the like. The second prediction model 243 is subjected to supervised learning by a supervised learning unit 255 that will be described later on the basis of the second training data set 244.

The second training data set 244 includes pieces of process data to which a plurality of labels are assigned, respectively. For example, the second training data set 244 includes information in which the label "1 (normal)" is assigned to the normal data included in the first training data set 141, and information in which the label "0 (abnormality)" is assigned to the abnormal data positioned at the plurality of x points.

The control unit 250 is a processing unit that manages the entire of the analysis apparatus 200, and is implemented by, for example, a processor, or the like. The control unit 250 includes an acquisition unit 251, the unsupervised learning unit 252, a detection unit 253, a factor analysis unit 254, the supervised learning unit 255, an estimation unit 256, and a retraining unit 257.

The acquisition unit 251 is a processing unit that acquires process data from the system 50 in real time. The acquisition unit 251 outputs the acquired process data to the detection unit 253 and the estimation unit 256.

The acquisition unit 251 registers the process data acquired from the system 50 in a period of time in which abnormal data is not detected by a detection unit 353 that will be described later into the first training data set 141.

The acquisition unit 251 assigns the label "1 (normal)" to the normal data (the process data indicated as "normal" by the estimation result) that has been set in the first training data set 141, and registers the normal data in the second training data set 244.

The unsupervised learning unit 252 performs unsupervised learning on the first prediction model 142 on the basis of the first training data set 141. The other descriptions related to the unsupervised learning unit 252 are the same as the descriptions related to the unsupervised learning unit 152 according to the first embodiment.

The detection unit 253 inputs the process data to the first prediction model 142 that has been subjected to the unsupervised learning, and determines whether the input process data is normal data or abnormal data on the basis of the prediction value. In a case where the prediction value is equal to or greater than the threshold that has been set in advance (for example, 0.5), the detection unit 253 determines that the input process data is normal data. In contrast, in a case where the prediction value is less than the threshold that has been set in advance, the detection unit 253 determines that the input process data is abnormal data. The detection unit 253 sets the determination result (estimation result) in the first training data set 141.

The detection unit 253 repeatedly performs the above described process, and detects pieces of abnormal data positioned at the plurality of x points. The detection unit 253 outputs the abnormal data positioned at the plurality of x points to the factor analysis unit 254. Furthermore, the detection unit 253 assigns the label "0 (abnormality)" to the abnormal data (process data) positioned at the plurality of x points, and registers the abnormal data in the second training data set 244.

The detection unit 253 notifies the acquisition unit 251 of a period of time in which the abnormal data is not detected (a period of time in which abnormality does not occur in the system 50).

The factor analysis unit 254 performs the factor analysis by using both of the pieces of abnormal data positioned at the plurality of x points and the first prediction model 142 that has been subjected to the unsupervised learning. The factor analysis performed by the factor analysis unit 254 is the same as that performed by the factor analysis unit 154 according to the first embodiment. The factor analysis unit 254 outputs the result of the factor analysis to the display unit 130, or the like.

The supervised learning unit 255 performs supervised learning on the second prediction model 243 on the basis of the error propagation technique or the like on the basis of the second training data set 244. The other descriptions related to the supervised learning unit 255 are the same as the descriptions related to the above described supervised learning according to the second embodiment.

The estimation unit 256 performs an estimation of the first prediction model 142 by using the second prediction model 243 that has been subjected to the supervised learning. For example, the estimation unit 256 inputs the process data acquired from the system 50 in real time to both of the first prediction model 142 and the second prediction model 243, and obtains prediction results from the first prediction model 142 and the second prediction model 243.

In a case where the prediction results of the first prediction model 142 and the second prediction model 243 are the same, the estimation unit 256 estimates that the performance of the first prediction model 142 does not decrease. In contrast, in a case where the prediction results of the first prediction model 142 and the second prediction model 243 are different, the estimation unit 256 estimates that the performance of the first prediction model 142 has decreased.

In a case where the estimation unit 256 estimates that the performance of the first prediction model 142 has decreased, the estimation unit 256 outputs a retraining request to the retraining unit 257. The other descriptions related to the estimation unit 256 are the same as those related to the estimation of the first prediction model according to the second embodiment described above.

In a case where the retraining unit 257 receives a retraining request from the estimation unit 256, the retraining unit 257 recognizes that the performance of the first prediction model 142 has decreased, and retrains the first prediction model 142. The other descriptions related to the retraining unit 257 are the same as the descriptions related to the retraining unit 157 according to the first embodiment.

### Flow of process performed by analysis apparatus 200 according to the second embodiment

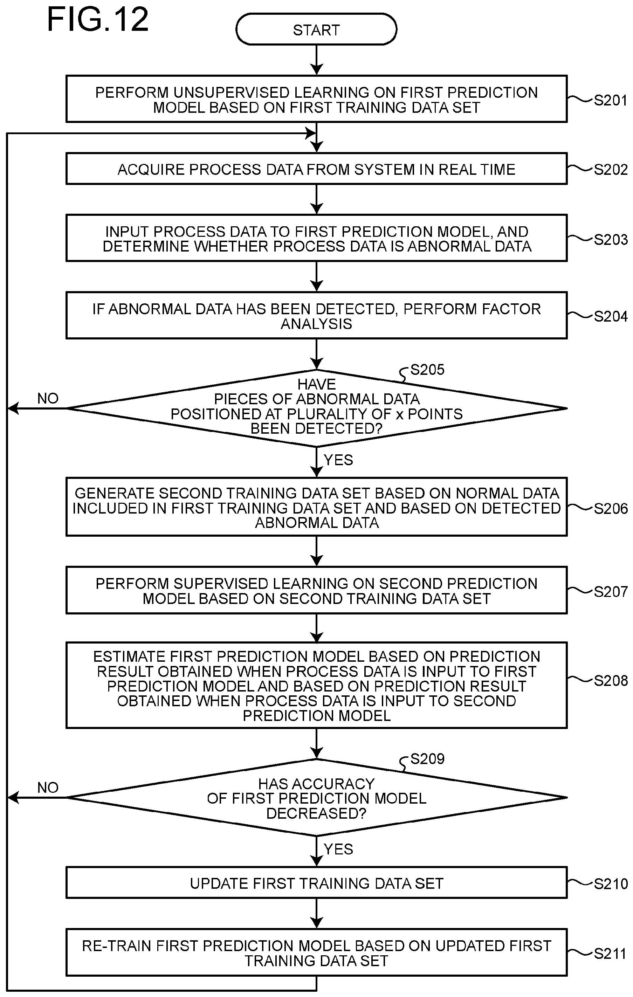

In the following, one example of the flow of the process performed by the analysis apparatus 200 according to the second embodiment. FIG. 12 is a flowchart illustrating the flow of the process performed by the analysis apparatus 200 according to the second embodiment. As illustrated in FIG. 12, the unsupervised learning unit 252 included in the analysis apparatus 200 performs unsupervised learning on the first prediction model 142 on the basis of the first training data set 141 (Step S201).

The acquisition unit 251 included in the analysis apparatus 200 acquires process data from the system 50 in real time (Step S202). The detection unit 253 included in the analysis apparatus 200 inputs the process data to the first prediction model 142, and determines whether or not the process data is abnormal data (Step S203).

If abnormal data has been detected, the factor analysis unit 254 included in the analysis apparatus 200 performs a factor analysis (Step S204). If pieces of abnormal data positioned at the plurality of x points are not detected (No at Step S205), the analysis apparatus 200 proceeds to Step S202. In contrast, if pieces of abnormal data positioned at the plurality of x points have been detected (Yes at Step S205), the analysis apparatus 200 proceeds to Step S206.

The analysis apparatus 200 generates the second training data set 244 on the basis of the normal data included in the first training data set 141 and the detected abnormal data (Step S206). The supervised learning unit 255 included in the analysis apparatus 200 performs supervised learning on the second prediction model 243 on the basis of the second training data set 244 (Step S207).

The estimation unit 256 included in the analysis apparatus 200 estimates the first prediction model 142 on the basis of the prediction result obtained when the process data has been input to the first prediction model 142, and on the basis of the prediction result obtained when the process data has been input to the second prediction model 243 (Step S208).

If the accuracy of the first prediction model does not decrease (No at Step S209), the analysis apparatus 200 proceeds to Step S202. In contrast, if the accuracy of the first prediction model has decreased (Yes at Step S209), the analysis apparatus 200 proceeds to Step S210.

The analysis apparatus 200 updates the first training data set 141 (Step S210). The retraining unit 257 included in the analysis apparatus 200 re-trains the first prediction model 142 (unsupervised learning) on the basis of the first training data set 141 (Step S211), and proceeds to Step S202.

### Effect of the second embodiment

In the following, the effect of the analysis apparatus 200 according to the second embodiment will be described. In the analysis apparatus 100 according to the first embodiment described above, supervised learning is performed on the second prediction model 143 by using the plurality of pieces of process data that are collected in the period of time in which abnormality does not occur in the system 50 as the normal data instead of using the estimation results. In contrast, in the analysis apparatus 200 according to the second embodiment, the supervised learning is performed on the second prediction model 243 by using a plurality of pieces of process data that are collected in a period of time in which abnormality does not occur in the system 50 and that are indicated as "normal" by the estimation result as the normal data.

As a result of this, the supervised learning is performed by using the pieces of normal data that are obtained by removing the abnormal data from the training data (process data), so that it is possible to enhance prediction accuracy of the second prediction model 243 as compared with the second prediction model 143 according to the first embodiment. Furthermore, it is possible to further appropriately detect a decrease in performance of the first prediction model 142 by enhancing the prediction accuracy of the second prediction model 243.

### Third Embodiment

### Description of process performed by analysis apparatus 300

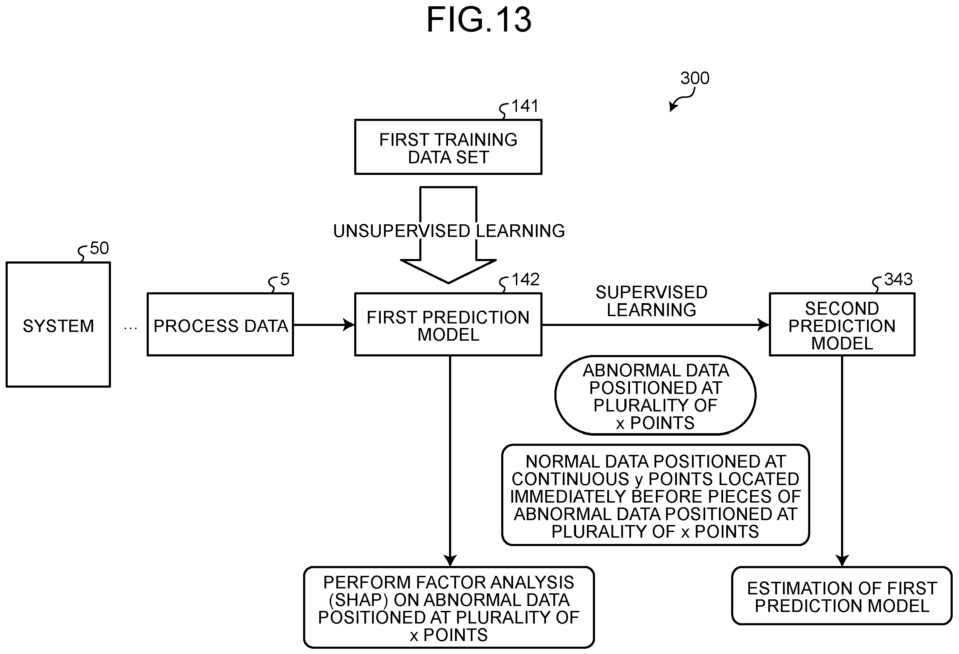

In the following, one example of a process performed by an analysis apparatus 300 according to a third embodiment will be described. FIG. 13 is a diagram for explaining a process performed by the analysis apparatus according to the third embodiment. For example, the analysis apparatus 300 is connected to the system 50 corresponding to the monitored target. Descriptions related to the system 50 are the same as the descriptions related to the system 50 described above with reference to FIG. 4.

The analysis apparatus 300 performs unsupervised learning, a factor analysis, supervised learning, an estimation of the first prediction model, unsupervised learning once again that will be described below on the basis of process data 5.

### Unsupervised learning according to the third embodiment

The analysis apparatus 300 performs unsupervised learning on the first prediction model 142 on the basis of the first training data set 141. The unsupervised learning performed by the analysis apparatus 300 is the same as the unsupervised learning performed by the analysis apparatus 100 according to the first embodiment. Furthermore, descriptions related to the first training data set 141 and the first prediction model 142 are the same as those described above in the first embodiment.

### Factor analysis according to the third embodiment

After the analysis apparatus 300 has completed the unsupervised learning performed on a first prediction model 142, the analysis apparatus 300 performs a factor analysis by using the first prediction model 142. The factor analysis performed by the analysis apparatus 300 is the same as the factor analysis performed by the analysis apparatus 100 according to the first embodiment.

### Supervised learning according to the third embodiment

The analysis apparatus 300 uses continuous y points that are located immediately before the pieces of abnormal data, which are positioned at the plurality of x points detected when the above described factor analysis is performed, as "normal data" for the supervised learning to be performed on a second prediction model 342. For example, the pieces of process data corresponding to the item numbers 0 to 5 included in the estimation result table T1 illustrated in FIG. 6 are used as the normal data. Furthermore, the analysis apparatus 300 uses the pieces of abnormal data positioned at the plurality of x points detected when the above described factor analysis has been performed as the "abnormal data" for the supervised learning to be performed on the second prediction model 342.

The analysis apparatus 300 prepares, by performing the following process, the second training data set that is used to perform the supervised learning. In FIG. 13, an illustration of a diagram of the second training data set is omitted. The analysis apparatus 300 assigns the label "1 (normal)" to the normal data included in the first training data set 141. The analysis apparatus 300 assigns the label "0 (abnormality)" to the pieces of abnormal data positioned at the plurality of x points.

The analysis apparatus 300 registers the process data to which the label has been assigned in the second training data set. The analysis apparatus 300 uses the second training data set, and performs the supervised learning on a second prediction model 343 on the basis of the error propagation technique, or the like. The second prediction model 343 is a NN, or the like.

For example, the analysis apparatus 300 inputs, to the second prediction model 343, the input data (for example, a combination of the first feature value, the second feature value, the third feature value, and the fourth feature value), and updates the parameters for the second prediction model 343 such that the value that is output from the second prediction model 343 approaches the value of the label.

### Estimation of first prediction model according to the third embodiment

The analysis apparatus 300 performs an estimation of the first prediction model 142 by using the second prediction model 343 that has been subjected to the supervised learning. For example, the analysis apparatus 300 inputs the process data acquired from the system 50 in real time to both of the first prediction model 142 and the second prediction model 343, and obtains prediction results from the first prediction model 142 and the second prediction model 343. In a case where the prediction results obtained from the first prediction model 142 and the second prediction model 343 are the same, the analysis apparatus 300 estimates that the performance of the first prediction model 142 does not decrease. In contrast, in a case where the prediction results obtained from the first prediction model 142 and the second prediction model 343 are different, the analysis apparatus 300 estimates that the performance of the first prediction model 142 has decreased.

Furthermore, the analysis apparatus 300 may estimate the first prediction model 142 by performing the following process. The analysis apparatus 300 inputs the process data acquired from the system 50 in real time to the first prediction model 142, and acquires the data that has been determined to be abnormal data by the first prediction model 142. The analysis apparatus 300 repeatedly performs the above described process, and acquires the pieces of abnormal data positioned at the plurality of x points.

The analysis apparatus 300 inputs each of the pieces of abnormal data positioned at the plurality of x points to the second prediction model 343, and acquires the prediction result of the second prediction model 343. In a case where the second prediction model 343 determines that the pieces of abnormal data account for less than a predetermined percentage of the pieces of abnormal data positioned at the plurality of x points are normal data, the analysis apparatus 300 estimates that the performance of the first prediction model 142 does not decrease. In contrast, in a case where the second prediction model 343 determines that the pieces of abnormal data account for equal to or greater than the predetermined percentage of the pieces of abnormal data positioned at the plurality of x points are normal data, the analysis apparatus 300 estimates that the performance of the first prediction model 142 has decreased.

In a case where the performance of the first prediction model 142 has decreased, the analysis apparatus 300 may perform the factor analysis by using the second prediction model 343.

### Retrain of unsupervised learning according to the third embodiment

In a case where the analysis apparatus 300 estimates that the performance of the first prediction model 142 has decreased, the analysis apparatus 300 performs the following process. The analysis apparatus 300 deletes the old process data that has been registered in the first training data set 141. The analysis apparatus 300 determines whether or not abnormality occurs in the system 50 by inputting the process data output from the system 50 to the second prediction model 343. The analysis apparatus 300 newly registers the process data obtained in a period of time in which abnormality does not occur in the system 50 into the first training data set 141.

The analysis apparatus 300 uses the first training data set 141 in which the process data has been newly registered, and performs the unsupervised learning once again on the first prediction model 142.

As described above, the analysis apparatus 300 according to the third embodiment uses the continuous y points that are located immediately before the pieces of abnormal data, which are positioned at the plurality of x points detected when the factor analysis is performed, as "normal data" for supervised learning to be performed on the second prediction model 342, and uses the pieces of abnormal data positioned at the plurality of x points detected when the above described factor analysis is performed as the "abnormal data" for the supervised learning to be performed on the second prediction model 342. As a result of this, it is possible to perform the supervised learning on the second prediction model 343 by using the most recent process data.

### Functional configuration of analysis apparatus 300 according to the third embodiment

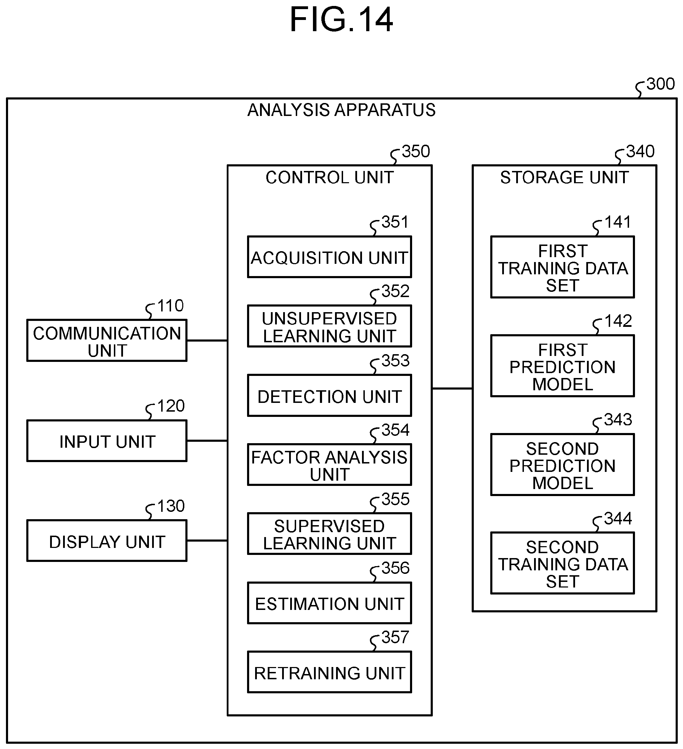

In the following, an example of a configuration of the analysis apparatus 300 illustrated in FIG. 13 will be described. FIG. 14 is a functional block diagram illustrating a functional configuration of the analysis apparatus according to the third embodiment. As illustrated in FIG. 14, the analysis apparatus 300 includes the communication unit 110, the input unit 120, the display unit 130, a storage unit 340, and a control unit 350. Furthermore, the functioning units included in the analysis apparatus 300 are not limited to those illustrated in FIG. 14, and another functioning unit may be included.

Descriptions related to the communication unit 110, the input unit 120, and the display unit 130 are the same as the descriptions related to the communication unit 110, the input unit 120, and the display unit 130 described above with reference to FIG. 8.

The storage unit 340 stores therein the first training data set 141, the first prediction model 142, the second prediction model 343, and a second training data set 344. The storage unit 340 is implemented by a memory, a hard disk, or the like.

The first training data set 141 includes pieces of process data collected in a period of time in which abnormality does not occur in the system 50. The other descriptions related to the first training data set 141 are the same as the descriptions related to the first training data set 141 described above with reference to FIG. 5, or the like.

The first prediction model 142 is a One Class SVM, or the like. The first prediction model 142 is subjected to unsupervised learning by an unsupervised learning unit 352 that will be described later on the basis of the first training data set 141.

The second prediction model 343 is a NN, or the like. The second prediction model 343 is subjected to supervised learning by a supervised learning unit 355 that will be described later on the basis of the second training data set 344.

The second training data set 344 includes pieces of normal data to each of which the label "1 (normal)" is assigned, and pieces of abnormal data to each of which the label "0 (abnormality)" is assigned. The pieces of normal data are data positioned at continuous y points that are located immediately before the pieces of abnormal data that are positioned at the plurality of x points and that have been detected when the factor analysis has been performed. The pieces of abnormal data are data positioned at the plurality of x points detected when the factor analysis has been performed.

The control unit 350 is a processing unit that manages the entire of the analysis apparatus 300, and is implemented by, for example, a processor, or the like. The control unit 350 includes an acquisition unit 351, the unsupervised learning unit 352, the detection unit 353, a factor analysis unit 354, the supervised learning unit 355, an estimation unit 356, and a retraining unit 357.

The acquisition unit 351 is a processing unit that acquires process data from the system 50 in real time. The acquisition unit 351 outputs the acquired process data to the detection unit 353 and the estimation unit 356.

The acquisition unit 351 registers the process data acquired from the system 50 in a period of time in which abnormal data is not detected by the detection unit 353 that will be described later into the first training data set 141.

The unsupervised learning unit 352 performs unsupervised learning on the first prediction model 142 on the basis of the first training data set 141. The other descriptions related to the unsupervised learning unit 352 are the same as the descriptions related to the unsupervised learning unit 152 according to the first embodiment.

The detection unit 353 inputs the process data to the first prediction model 142 that has been subjected to the unsupervised learning, and determines whether the input process data is normal data or abnormal data on the basis of the prediction value. In a case where the prediction value is equal to or greater than the threshold that is set in advance (for example, 0.5), the detection unit 353 determines that the input process data is normal data. In contrast, in a case where the prediction value is less than the threshold that is set in advance, the detection unit 353 determines that the input process data is abnormal data.

The detection unit 353 repeatedly performs the above described process, and detects the pieces of abnormal data positioned at the plurality of x points. The detection unit 253 outputs the abnormal data positioned at the plurality of x points to the factor analysis unit 254.

The detection unit 353 assigns the label "1 (normal)" to the pieces of data (normal data) positioned at the continuous y points located immediately before the pieces of abnormal data positioned at the plurality of x points, and registers the normal data in the second training data set 344. The detection unit 353 assigns the label "0 (abnormality)" to the pieces of abnormal data positioned at the plurality of x points, and registers the abnormal data in the second training data set 344.

The detection unit 353 notifies the acquisition unit 351 of the period of time in which abnormal data is not detected (the period of time in which abnormality does not occur in the system 50).

The factor analysis unit 354 performs the factor analysis by using the pieces of abnormal data positioned at the plurality of x points and the first prediction model 142 that has been subjected to the unsupervised learning. The factor analysis performed by the factor analysis unit 354 is the same as that performed by the factor analysis unit 154 according to the first embodiment. The factor analysis unit 354 outputs the result of the factor analysis to the display unit 130, or the like.

The supervised learning unit 355 performs supervised learning on the second prediction model 343 on the basis of the error propagation technique or the like on the basis of the second training data set 344. The other descriptions related to the supervised learning unit 355 are the same as the descriptions related to the supervised learning according to according to the third embodiment described above.

The estimation unit 356 performs an estimation of the first prediction model 142 by using the second prediction model 343 that has been subjected to the supervised learning. For example, the estimation unit 356 inputs the process data acquired from the system 50 in real time to the first prediction model 142 and the second prediction model 343, and obtains prediction results from the first prediction model 142 and the second prediction model 343.

In a case where the prediction results of the first prediction model 142 and the second prediction model 343 are the same, the estimation unit 356 estimates that the performance of the first prediction model 142 does not decrease. In contrast, in case where the prediction results of the first prediction model 142 and the second prediction model 343 are different, the estimation unit 356 estimates that the performance of the first prediction model 142 has decreased.

In a case where the estimation unit 356 estimates that the performance of the first prediction model 142 has decreased, the estimation unit 356 outputs a retraining request to the retraining unit 357. The other descriptions related to the estimation unit 356 are the same as the descriptions related to the estimation of the first prediction model according to the third embodiment described above.

In a case where the retraining unit 357 receives the retraining request from the estimation unit 356, the retraining unit 357 recognizes that the performance of the first prediction model 142 has decreased, and retrains the first prediction model 142. The other descriptions related to the retraining unit 357 are the same as the descriptions related to the retraining unit 157 according to the first embodiment.

### Flow of process performed by analysis apparatus 300 according to the third embodiment

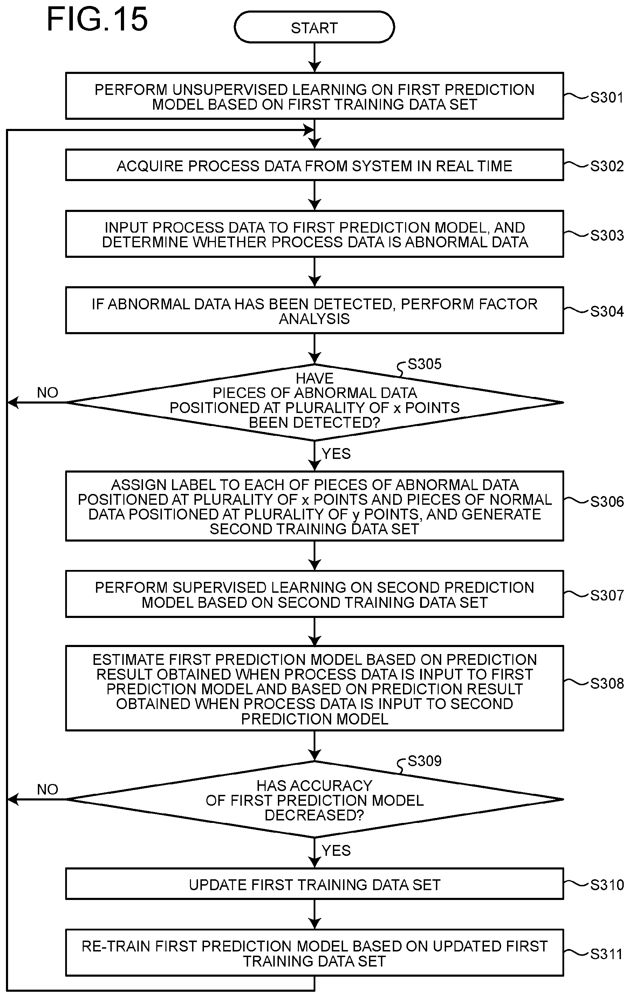

In the following, one example of the flow of the process performed by the analysis apparatus 300 according to the third embodiment will be described. FIG. 15 is a flowchart illustrating the flow of the process performed by the analysis apparatus 300 according to the third embodiment. As illustrated in FIG. 15, the unsupervised learning unit 252 included in the analysis apparatus 300 performs unsupervised learning on the first prediction model 142 on the basis of the first training data set 141 (Step S301).

The acquisition unit 251 included in the analysis apparatus 300 acquires the process data from the system 50 in real time (Step S302). The detection unit 353 included in the analysis apparatus 300 inputs the process data to the first prediction model 142, and determines whether or not the process data is abnormal data (Step S303).

If abnormal data has been detected, the factor analysis unit 354 included in the analysis apparatus 300 performs the factor analysis (Step S304). If the pieces of abnormal data positioned at the plurality of x points are not detected (No at Step S305), the analysis apparatus 300 proceeds to Step S302. In contrast, if the pieces of abnormal data positioned at the plurality of x points have been detected (Yes at Step S305), the analysis apparatus 300 proceeds to Step S306.

The analysis apparatus 300 assigns a label to each of the pieces of abnormal data positioned at the plurality of x points and the pieces of normal data positioned at the plurality of y points, and generates the second training data set (Step S306). The supervised learning unit 355 included in the analysis apparatus 300 performs supervised learning on the second prediction model 343 on the basis of the second training data set 344 (Step S307).

The estimation unit 356 included in the analysis apparatus 300 estimates the first prediction model 142 on the basis of both of the prediction result obtained when the process data has been input to the first prediction model 142 and the prediction result obtained when the process data has been input to the second prediction model 343 (Step S308).

In a case where the accuracy of the first prediction model does not decrease (No at Step S309), the analysis apparatus 300 proceeds to Step S302. In contrast, in a case where the accuracy of the first prediction model has decreased (Yes at Step S309), the analysis apparatus 300 proceeds to Step S310.

The analysis apparatus 300 updates the first training data set 141 (Step S310). The retraining unit 257 included in the analysis apparatus 200 retrains the first prediction model 142 (unsupervised learning) on the basis of the first training data set 141 (Step S311), and proceeds to Step S302.

### Effect of the third embodiment

The analysis apparatus 300 according to the third embodiment uses continuous y points located immediately before the pieces of abnormal data positioned at the plurality of x points detected when the factor analysis has been performed as "normal data" for the supervised learning to be performed on the second prediction model 342, and uses the pieces of abnormal data positioned at the plurality of x points detected when the above described factor analysis has been performed as "abnormal data" for the supervised learning to be performed on the second prediction model 342. As a result of this, it is possible to perform the supervised learning on the second prediction model 343 by using the most recent process data.

### Fourth Embodiment

In the first to the third embodiments described above, it is determined whether or not abnormality occurs in the system 50 by using the first prediction model 142 or the second prediction model 143 (243, or 343), but the embodiment is not limited to these. For example, in addition to the prediction result obtained from the first prediction model 142 or the second prediction model 143, a factor analysis is performed by further calculating a plant key performance indicator (KPI), and determining whether or not abnormality occurs in the system 50 on the basis of the prediction result obtained from the first prediction model 142 or the second prediction model 143 and on the basis of the value of the plant KPI.

### Description of process performed by analysis apparatus 400

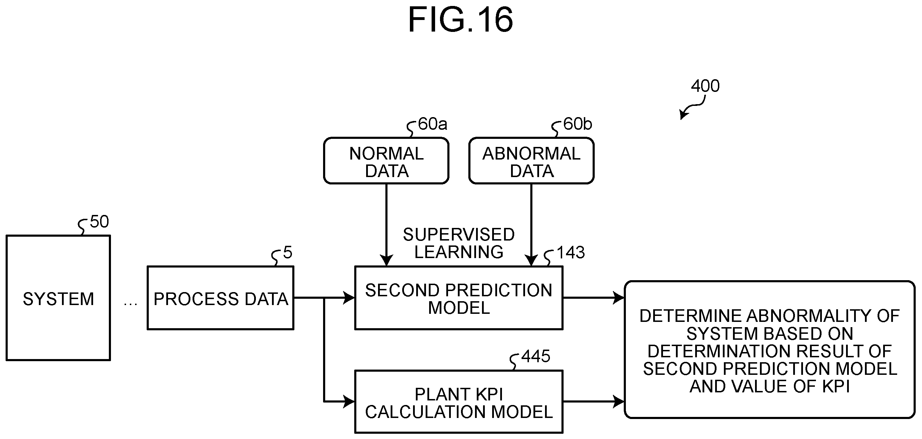

One example of the process performed by an analysis apparatus 400 according to a fourth embodiment will be described. FIG. 16 is a diagram for explaining a process performed by the analysis apparatus according to the fourth embodiment. For example, the analysis apparatus 400 is connected to the system 50 corresponding to the monitored target. Descriptions related to the system 50 are the same as the descriptions related to the system 50 described above with reference to FIG. 4.

The analysis apparatus 400 performs supervised learning on the second prediction model 143 on the basis of normal data 60a and abnormal data 60b that are prepared in advance. The analysis apparatus 400 may collect the normal data 60a by using the method described above in the first to the third embodiments, or may collect the normal data 60a by using another method. The analysis apparatus 400 uses the abnormal data obtained from the first prediction model 142 that has been subjected to the unsupervised learning as the abnormal data 60b. Content of the descriptions related to the first prediction model 142 is the same as that described in the first embodiment. Furthermore, content of the supervised learning performed on the second prediction model 143 by the analysis apparatus 400 is the same as that described above in the first embodiment.

The analysis apparatus 400 inputs the process data 5 to the second prediction model 143 that has been subjected to the supervised learning, and determines whether or not the process data 5 is abnormal data.

Furthermore, the analysis apparatus 400 inputs the process data 5 to a plant KPI calculation model 445, and calculates a value of the plant KPI. Furthermore, in the process data 5, feature values related to productivity, quality, cost price, and the like of a plant are included, in addition to the feature value described above in the first embodiment.

The plant KPI calculation model 445 is a model for calculating a plant KPI with respect to a predetermined feature value included in the process data 5. For example, the plant KPI calculation model 445 calculates a plant KPI on the basis of Equation (1). For example, the actual performance value denotes a predetermined feature value (quality of deliverables, CO₂ emissions, or the like) included in the process data 5, and the target value denotes a value that is set in advance.
$plant KPI = \left(actual performance value/target value\right) \times 100$ (1)

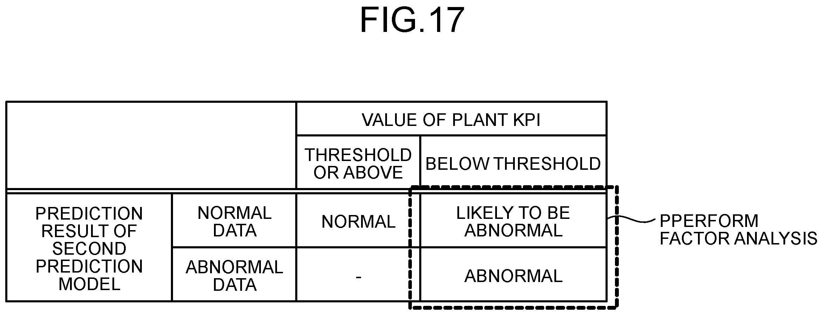

FIG. 17 is a diagram for explaining one example of determination policy of the analysis apparatus according to the fourth embodiment. For example, in a case where a determination result obtained when the process data is input to the second prediction model 143 is "abnormal data", and also, in a case where a KPI value indicated when the process data is input to the plant KPI calculation model 445 is less than a threshold, the analysis apparatus 400 performs a factor analysis on the corresponding process data. Furthermore, even if the determination result indicated when the process data is input to the second prediction model 143 is "normal data", in a case where a KPI value indicated when the process data is input to the plant KPI calculation model 445 is less than the threshold, the analysis apparatus 400 performs a factor analysis on the corresponding process data.

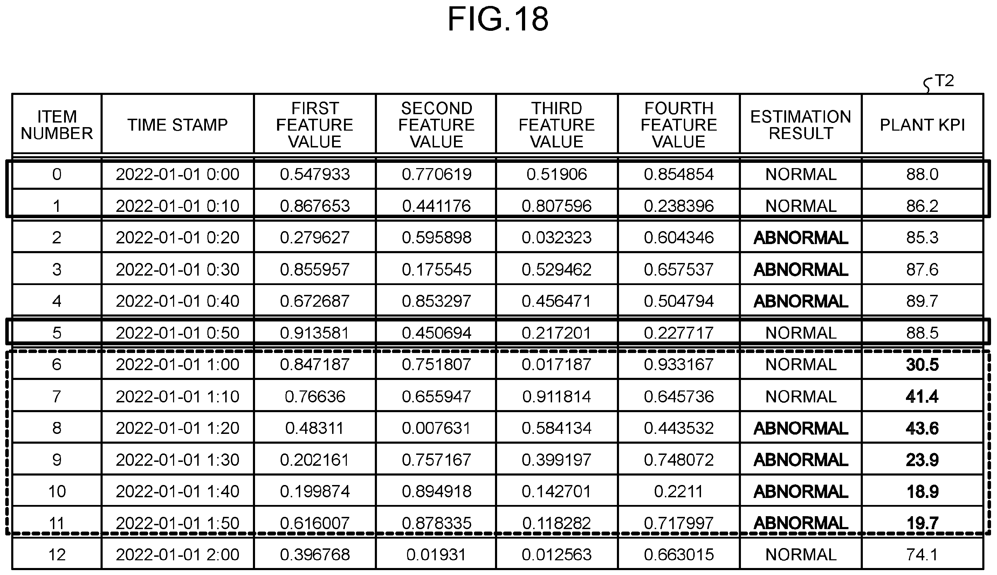

FIG. 18 is a diagram illustrating one example of determination results of the process data acquired in real time and plant KPIs. As illustrated in FIG. 18, in an estimation result table T2, the item number, the time stamp, the first feature, the second feature, the third feature, the fourth feature, the estimation result, and the plant KPI are included. Descriptions related to the item number, the time stamp, the first to the fourth feature values, and the estimation result are the same as the descriptions related to the item number, the time stamp, the first to the fourth feature values, and the estimation result described above with reference to FIG. 5. Furthermore, a description related to the plant KPI is also the same as the above described description. Furthermore, it is assumed that the threshold to be compared with the plant KPI is "50".

In the example illustrated in FIG. 18, the analysis apparatus 400 performs determination by regarding the process data corresponding to the item numbers 6 to 11 as the process data targeted for the factor analysis illustrated in FIG. 17. The analysis apparatus 400 performs a factor analysis on the pieces of process data corresponding to the item numbers 6 to 11. The factor analysis performed by the analysis apparatus 400 is the same as the factor analysis described above in the first to the third embodiments.

As described above, the analysis apparatus 400 according to the fourth embodiment identifies the process data targeted for the factor analysis on the basis of the prediction result of the second prediction model 143 with respect to the process data and on the basis of the calculation result of the plant KPI calculation model 445. As a result of this, it is possible to perform a factor analysis on the process data that is not able to be targeted for a factor analysis in the first to the third embodiments. For example, even if the determination result indicated when the process data is input to the second prediction model 143 is "normal data", in a case where a KPI value indicated when the process data is input to the plant KPI calculation model 445 is less than the threshold, the analysis apparatus 400 according to the fourth embodiment is able to perform a factor analysis on the corresponding process data.

### Functional configuration of analysis apparatus 400 according to the fourth embodiment

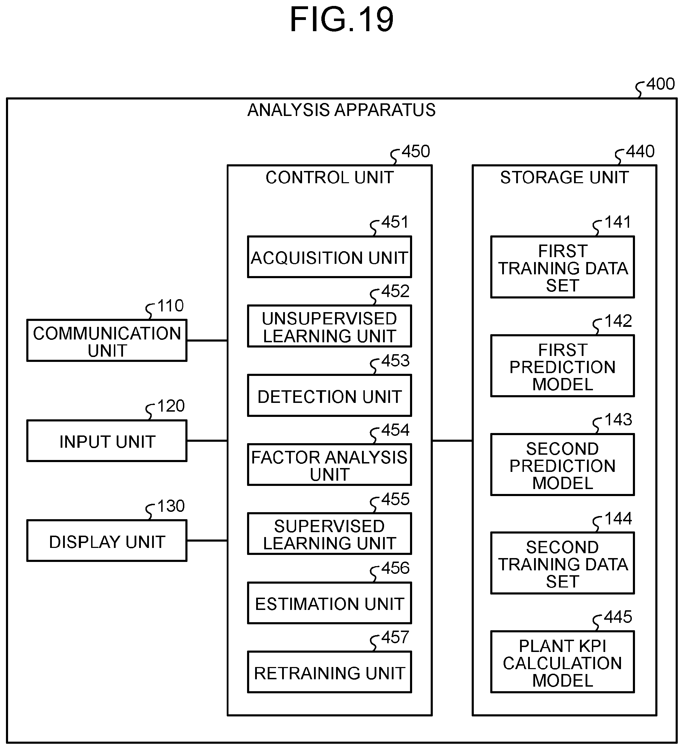

In the following, an example of a configuration of the analysis apparatus 400 illustrated in FIG. 16 will be described. FIG. 19 is a functional block diagram illustrating a functional configuration of the analysis apparatus according to the fourth embodiment. As illustrated in FIG. 19, the analysis apparatus 400 includes the communication unit 110, the input unit 120, the display unit 130, a storage unit 440, and a control unit 450. Furthermore, the functioning units included in the analysis apparatus 400 are not limited to those illustrated in FIG. 19, and another functioning unit may be used.

Descriptions related to the communication unit 110, the input unit 120, and the display unit 130 are the same as the descriptions related to the communication unit 110, the input unit 120, and the display unit 130 described above with reference to FIG. 8.

The storage unit 440 stores therein the first training data set 141, the first prediction model 142, the second prediction model 243, the second training data set 144, and the plant KPI calculation model 445. The storage unit 440 is implemented by a memory, a hard disk, or the like.

The first training data set 141 includes pieces of process data collected in a period of time in which abnormality does not occur in the system 50. The other descriptions related to the first training data set 141 are the same as the descriptions related to the first training data set 141 described above with reference to FIG. 5, and the like.

The first prediction model 142 is a One Class SVM, or the like. The first prediction model 142 is subjected to unsupervised learning by an unsupervised learning unit 452 that will be described later on the basis of the first training data set 141.

The second prediction model 143 is a NN, or the like. The second prediction model 143 is subjected to supervised learning by a supervised learning unit 455 that will be described later on the basis of the second training data set 144.

The second training data set 144 includes pieces of process data to which a plurality of labels are assigned, respectively. For example, the second training data set 144 includes information in which the label "1 (normal)" is assigned to the normal data included in the first training data set 141, and information in which the label "0 (abnormality)" is assigned to each of the pieces abnormal data positioned at the plurality of x points.

The plant KPI calculation model 445 is a model for calculating a plant KPI.

The control unit 450 is a processing unit that manages the entire of the analysis apparatus 400, and is implemented by, for example, a processor, or the like. The control unit 450 includes an acquisition unit 451, the unsupervised learning unit 452, a detection unit 453, a factor analysis unit 454, the supervised learning unit 455, an estimation unit 456, and a retraining unit 457.

The acquisition unit 451 is a processing unit that acquires process data from the system 50 in real time. The acquisition unit 451 outputs the acquired process data to the detection unit 453 and the estimation unit 456.

The acquisition unit 451 registers the process data acquired from the system 50 in a period of time in which abnormal data is not detected by the detection unit 453 that will be described later into the first training data set 141.

The acquisition unit 451 assigns the label "1 (normal)" to the normal data (the process data indicated as "normal" by the estimation result) that is set in the first training data set 141, and registers the normal data in the second training data set 244. Furthermore, the acquisition unit 451 may acquire the normal data by using another method, assign a label to the acquired normal data, and register the acquired normal data in the second training data set 244.

The unsupervised learning unit 452 performs unsupervised learning on the first prediction model 142 on the basis of the first training data set 141. The other descriptions related to the unsupervised learning unit 452 are the same as the descriptions related to the unsupervised learning unit 152 according to the first embodiment.

The detection unit 453 inputs the process data to the first prediction model 142 that has been subjected to the unsupervised learning, and determines whether the input process data is normal data or abnormal data on the basis of the prediction value. In a case where the prediction value is equal to or greater than the threshold that is set in advance (for example, 0.5), the detection unit 453 determines that the input process data is normal data. In contrast, in a case where the prediction value is less than the threshold that is set in advance, the detection unit 453 determines that the input process data is abnormal data.

Furthermore, the detection unit 453 inputs the process data to the plant KPI calculation model 445, and calculates a value of the plant KPI. The process of calculating the plant KPI performed by the detection unit 453 is the same as the process described above.

The detection unit 453 repeatedly performs the above described process, extracts the process data targeted for the factor analysis described above with reference to FIG. 17, and outputs the extracted process data to the factor analysis unit 454. For example, the detection unit 453 outputs the pieces of process data corresponding to the item numbers 6 to 11 from among the pieces of process data described above with reference to FIG. 18 to the factor analysis unit 454.

The factor analysis unit 454 performs the factor analysis by using the pieces of process data (abnormal data) positioned at the plurality of x points and using the second prediction model 143 that has been subjected to the supervised learning. The factor analysis performed by the factor analysis unit 454 is the same as that performed by the factor analysis unit 154 according to the first embodiment. The factor analysis unit 454 outputs the result of the factor analysis to the display unit 130, or the like. Furthermore, the factor analysis unit 454 may perform the factor analysis by using the first prediction model 142 that has been subjected to the unsupervised learning.

The supervised learning unit 455 performs supervised learning on the second prediction model 143 on the basis of the error propagation technique or the like on the basis of the second training data set 144. The other descriptions related to the supervised learning unit 455 are the same as the descriptions related to the supervised learning according to the first embodiment described above.

The estimation unit 456 performs an estimation of the first prediction model 142 by using the second prediction model 143 that has been subjected to the supervised learning. Descriptions related to the estimation unit 456 are the same as the descriptions related to the estimation unit 156 according to the first embodiment described above.

In a case where the retraining unit 457 receives a retraining request from the estimation unit 456, the retraining unit 457 recognizes that the performance of the first prediction model 142 has decreased, and retrains the first prediction model 142. The other descriptions related to the retraining unit 457 are the same as the descriptions related to the retraining unit 157 according to the first embodiment.

### Flow of process performed by analysis apparatus 400 according to the fourth embodiment

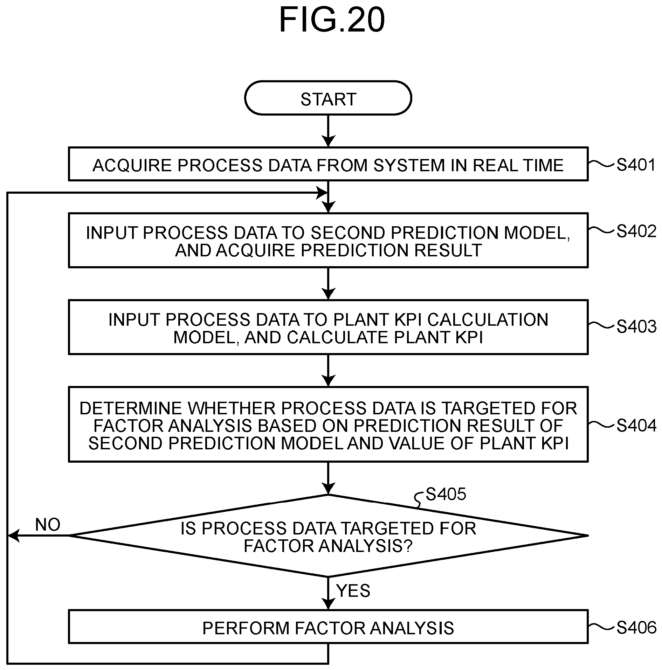

In the following, one example of the flow of the process performed by the analysis apparatus 400 according to the fourth embodiment will be described. FIG. 20 is a flowchart illustrating the flow of the process performed by the analysis apparatus 400 according to the fourth embodiment. Furthermore, the flow of the process of performing unsupervised learning on the first prediction model 142 by the analysis apparatus 400, the flow of the process of performing supervised learning on the second prediction model 143 by the analysis apparatus 400, and the flow of the process of determining a decrease in performance of the first prediction model 142 performed by the analysis apparatus 400 are the same as the flow of the processes performed by the analysis apparatus 100 according to the first embodiment. Accordingly, in a description of the flow of the process described with reference to FIG. 20, it is assumed that supervised learning has been performed on the second prediction model 143, and the flow of the process that is closely associated with the fourth embodiment will be described.

As illustrated in FIG. 20, the acquisition unit 451 included in the analysis apparatus 400 acquires process data from the system 50 in real time (Step S401). The detection unit 453 included in the analysis apparatus 400 inputs the process data to the second prediction model 143, and acquires the prediction result (Step S402).

The detection unit 453 inputs the process data to the plant KPI calculation model 445, and calculates the value of the plant KPI (Step S403). The detection unit 453 determines whether or not the process data is targeted for the factor analysis on the basis of the prediction result of the second prediction model 143 and the value of the plant KPI (Step S404).

If the process data is targeted for the factor analysis (Yes at Step S405), the factor analysis unit 454 included in the analysis apparatus 400 performs the factor analysis (Step S406), and proceeds to Step S402. In contrast, if the process data is not targeted for the factor analysis (No at Step S405), the factor analysis unit 454 proceeds to Step S402.

### Effect of the fourth embodiment

The analysis apparatus 400 according to the fourth embodiment identifies the process data targeted for the factor analysis on the basis of both of the prediction result of the second prediction model 143 with respect to the process data and the calculation result of the plant KPI calculation model 445. As a result of this, it is possible to perform the factor analysis on the process data that is not able to be targeted for a factor analysis in the first to the third embodiments. For example, even if the determination result indicated when the process data is input to the second prediction model 143 is "normal data", in a case where a KPI value indicated when the process data is input to the plant KPI calculation model 445 is less than the threshold, the analysis apparatus 400 according to the fourth embodiment is able to perform a factor analysis on the corresponding process data.

### Hardware

In the following, an example of a hardware configuration of the analysis apparatus 100 (200, 300, and 400) will be described. FIG. 21 is a diagram illustrating an example of the hardware configuration. As illustrated in FIG. 21, the analysis apparatus 100 includes a communication device 5a, a hard disk drive (HDD) 5b, a memory 5c, and a processor 5d. Furthermore, each of the units illustrated in FIG. 21 is connected by a bus, or the like with each other.

The communication device 5a is a network interface card, or the like, and communicates with another server. The HDD 5b stores therein program and a DB that operate the functions illustrated in FIG. 8.

The processor 5d operates the process that executes each of the functions described above in FIG. 8 or the like by reading the program that executes the same processes as those performed by each of the processing units illustrated in FIG. 8 from the HDD 5b or the like and loading the read program in the memory 5c. For example, the process executes the same function as that performed by each of the processing units included in the analysis apparatus 100. Specifically, the processor 5d executes the same processes as those performed by the acquisition unit 151, the unsupervised learning unit 152, the detection unit 153, the factor analysis unit 154, the supervised learning unit 155, the estimation unit 156, the retraining unit 157, and the like.

In this way, the analysis apparatus 100 operates as an analysis apparatus that executes an analysis method by reading and executing the program. Furthermore, the analysis apparatus 100 is also able to implement the same functions as those described above in the embodiments by reading the above described program from a recording medium by a medium reading device and executing the read program. In addition, the program described in this embodiment need not always be executed by the analysis apparatus 100. For example, the present invention may also be similarly applied to a case in which another computer or another server executes the program or in a case in which another computer and another server cooperatively execute the program with each other.

The program may be distributed via a network, such as the Internet. Furthermore, the program may be executed by being recorded in a computer readable medium, such as a hard disk, a flexible disk (FD), a CD-ROM, a magneto-optical disk (MO), or a digital versatile disk (DVD), and being read from the recording medium by the computer.

## Claims

1. An analysis apparatus (100) for analyzing process data (5) of a plant, the process data (5) being related to a plurality of field devices included in the plant, the analysis apparatus (100) comprising:
a detection unit (153, 253, 353) that is configured to detect abnormal data by inputting the process data (5) acquired in real time from a target system (50) managing the plant to a first prediction model (142) that is a trained model and has been subjected to unsupervised learning based on pre-existing data acquired during normal operation of the target system (50), wherein the first prediction model (142) is configured to output a prediction value when the process data (5) is input, wherein in a case where the prediction value is equal to or greater than a threshold, it is determined that the input process data (5) is normal data, and in a case where the prediction value is less than the threshold, it is determined that the input process data (5) is abnormal data;
a supervised learning unit (155, 255, 355) that is configured to perform supervised learning on a second prediction model (143) based on the abnormal data and the pre-existing data;
an estimation unit (156, 256, 356) that is configured to estimate the first prediction model (142) by inputting, to the second prediction model (143), process data that is the same as the process data (5) that has been input to the first prediction model (142), wherein the process data includes at least one of a pressure, a temperature or a flow rate; and
a retraining unit (157, 257, 357) that is configured to perform unsupervised learning once again on the first prediction model (142) based on an estimation result obtained by the estimation unit (156, 256, 356).

2. The analysis apparatus (100) according to claim 1, further comprising a factor analysis unit (154, 254, 354) that is configured to perform a factor analysis based on the abnormal data and the first prediction model (142).

3. The analysis apparatus (100) according to claim 2, wherein
the detection unit (153, 253, 353) is further configured to calculate a value of a plant key performance indicator (KPI) based on the process data (5) acquired from the target system (50), and
the factor analysis unit (154, 254, 354) is configured to identify, based on a prediction result of the first prediction model (142) or the second prediction model (143) and based on the value of the plant KPI, data targeted for the factor analysis from among the plurality of pieces of process data acquired from the target system (50).

4. The analysis apparatus (100) according to claim 1, wherein the estimation unit (156, 256, 356) is configured to estimate the first prediction model (142) based on a first prediction result that is output from the first prediction model (142) when the process data (5) is input to the first prediction model (142), and based on a second prediction result that is output from the second prediction model (143) when the data that is the same as the process data (5) that has been input to the first prediction model (142) is input to the second prediction model (143).

5. The analysis apparatus (100) according to claim 4, wherein the estimation unit (156, 256, 356) is configured to estimate the first prediction model (142) based on the second prediction result that is output from the second prediction model (143) when the process data (5) that has been predicted as the abnormal data by the first prediction model (142) is input to the second prediction model (143).

6. The analysis apparatus (100) according to claim 5, wherein
the estimation unit (156, 256, 356) is configured to estimate that performance of the first prediction model (142) has decreased when the first prediction result and the second prediction result are different, and
the retraining unit (157, 257, 357) is configured to perform unsupervised learning once again on the first prediction model (142) when the estimation unit (156, 256, 356) estimates that the performance of the first prediction model (142) has decreased.

7. The analysis apparatus (100) according to claim 1, wherein the supervised learning unit (155, 255, 355) is configured to perform supervised learning on the second prediction model (143) based on normal data that has been determined to be normal by the first prediction model (142) and based on the abnormal data from among the plurality of pieces of pre-existing data that are acquired during normal operation of the target system (50).

8. The analysis apparatus (100) according to claim 1, wherein the supervised learning unit (155, 255, 355) is configured to perform supervised learning on the second prediction model (143) based on the process data (5) acquired from the target system (50) immediately prior to detection of the abnormal data by the detection unit (153, 253, 353), and based on the abnormal data.

9. An analysis method for analyzing process data (5) of a plant, the process data (5) being related to a plurality of field devices included in the plant, the analysis method causing a computer to execute a process comprising:
detecting abnormal data by inputting in real time the process data (5) acquired from a target system (50) managing the plant to a first prediction model (142) that is a trained model and has been subjected to unsupervised learning based on pre-existing data acquired during normal operation of the target system (50), wherein the first prediction model (142) outputs a prediction value when the process data (5) is input, wherein in a case where the prediction value is equal to or greater than a threshold, it is determined that the input process data (5) is normal data, and in a case where the prediction value is less than the threshold, it is determined that the input process data (5) is abnormal data;
performing supervised learning on a second prediction model (143) based on the abnormal data and the pre-existing data;
estimating the first prediction model (142) by inputting, to the second prediction model (143), process data that is the same as the process data (5) that has been input to the first prediction model (142), wherein the process data includes at least one of a pressure, a temperature or a flow rate; and
performing unsupervised learning once again on the first prediction model (142) based on an estimation result.

10. An analysis program for analyzing process data (5) of a plant, the process data (5) being related to a plurality of field devices included in the plant, the analysis program causing a computer to execute a process comprising:
detecting abnormal data by inputting in real time the process data (5) acquired from a target system (50) managing the plant to a first prediction model (142) that is a trained model and has been subjected to unsupervised learning based on pre-existing data acquired during normal operation of the target system (50), wherein the first prediction model (142) outputs a prediction value when the process data (5) is input, wherein in a case where the prediction value is equal to or greater than a threshold, it is determined that the input process data (5) is normal data, and in a case where the prediction value is less than the threshold, it is determined that the input process data (5) is abnormal data;
performing supervised learning on a second prediction model (143) based on the abnormal data and the pre-existing data;
estimating the first prediction model (142) by inputting, to the second prediction model (143), process data that is the same as the process data (5) that has been input to the first prediction model (142), wherein the process data includes at least one of a pressure, a temperature or a flow rate; and
performing unsupervised learning once again on the first prediction model (142) based on an estimation result.

## Patentansprüche

1. Analysevorrichtung (100) zum Analysieren von Prozessdaten (5) einer Anlage, wobei die Prozessdaten (5) sich auf eine Vielzahl von in der Anlage enthaltenen Feldgeräten beziehen, wobei die Analysevorrichtung (100) umfasst:
eine Erfassungseinheit (153, 253, 353), die so konfiguriert ist, dass sie anomale Daten erfasst, indem sie die Prozessdaten (5), die in Echtzeit von einem die Anlage verwaltenden Zielsystem (50) beschafft werden, in ein erstes Vorhersagemodell (142) eingibt, bei dem es sich um ein trainiertes Modell handelt, das einem unüberwachten Lernvorgang auf der Grundlage bereits vorhandener Daten unterzogen wurde, die während eines Normalbetriebs des Zielsystems (50) beschafft wurde, wobei das erste Vorhersagemodell (142) so konfiguriert ist, dass es bei Eingabe der Prozessdaten (5) einen Vorhersagewert ausgibt, wobei in einem Fall, in dem der Vorhersagewert gleich oder größer als ein Schwellenwert ist, bestimmt wird, dass es sich bei den eingegebenen Prozessdaten (5) um normale Daten handelt, und in einem Fall, in dem der Vorhersagewert kleiner als der Schwellenwert ist, bestimmt wird, dass es sich bei den eingegebenen Prozessdaten (5) um anomale Daten handelt;
eine Einheit für überwachtes Lernen (155, 255, 355), die so konfiguriert ist, dass sie auf der Grundlage der anomalen Daten und der bereits vorhandenen Daten ein überwachtes Lernen an einem zweiten Vorhersagemodell (143) durchführt;
eine Schätzeinheit (156, 256, 356), die so konfiguriert ist, dass sie das erste Vorhersagemodell (142) schätzt, indem sie Prozessdaten, die mit den in das erste Vorhersagemodell (142) eingegebenen Prozessdaten (5) identisch sind, in das zweite Vorhersagemodell (143) eingibt, wobei die Prozessdaten mindestens einen der folgenden Werte umfassen: Druck, Temperatur oder Durchflussrate; und
eine Wiederholungstrainingseinheit (157, 257, 357), die so konfiguriert ist, dass sie auf der Grundlage eines von der Schätzeinheit (156, 256, 356) erhaltenen Schätzungsergebnisses erneut ein unüberwachtes Lernen am ersten Vorhersagemodell (142) durchführt.

2. Analysevorrichtung (100) nach Anspruch 1, ferner umfassend eine Faktorenanalyseeinheit (154, 254, 354), die so konfiguriert ist, dass sie auf der Grundlage der anomalen Daten und des ersten Vorhersagemodells (142) eine Faktorenanalyse durchführt.

3. Analysevorrichtung (100) nach Anspruch 2, wobei
die Erfassungseinheit (153, 253, 353) ferner so konfiguriert ist, dass sie einen Wert eines Anlagen-Leistungsindikators (KPI) auf der Grundlage der vom Zielsystem (50) beschafften Prozessdaten (5) berechnet, und
die Faktorenanalyseeinheit (154, 254, 354) so konfiguriert ist, dass sie auf der Grundlage eines Vorhersageergebnisses des ersten Vorhersagemodells (142) oder des zweiten Vorhersagemodells (143) sowie auf der Grundlage des Werts des Anlagen-KPI Daten, die für die Faktorenanalyse vorgesehen sind, aus der Vielzahl der vom Zielsystem (50) erfassten Prozessdaten identifiziert.

4. Analysevorrichtung (100) nach Anspruch 1, wobei die Schätzeinheit (156, 256, 356) so konfiguriert ist, dass sie das erste Vorhersagemodell (142) auf der Grundlage eines ersten Vorhersageergebnisses, das vom ersten Vorhersagemodell (142) ausgegeben wird, schätzt, wenn die Prozessdaten (5) in das erste Vorhersagemodell (142) eingegeben werden, und auf der Grundlage eines zweiten Vorhersageergebnisses, das vom zweiten Vorhersagemodell (143) ausgegeben wird, schätzt, wenn Daten, die mit den in das erste Vorhersagemodell (142) eingegebenen Prozessdaten (5) identisch sind, in das zweite Vorhersagemodell (143) eingegeben werden.

5. Analysevorrichtung (100) nach Anspruch 4, wobei die Schätzeinheit (156, 256, 356) so konfiguriert ist, dass sie das erste Vorhersagemodell (142) auf der Grundlage des zweiten Vorhersageergebnisses, das vom zweiten Vorhersagemodell (143) ausgegeben wird, schätzt, wenn die Prozessdaten (5), die vom ersten Vorhersagemodell (142) als anomale Daten vorhergesagt wurden, in das zweite Vorhersagemodell (143) eingegeben werden.

6. Analysevorrichtung (100) nach Anspruch 5, wobei
die Schätzeinheit (156, 256, 356) so konfiguriert ist, dass sie schätzt, dass die Leistung des ersten Vorhersagemodells (142) abgenommen hat, wenn das erste Vorhersageergebnis und das zweite Vorhersageergebnis voneinander abweichen, und
die Wiederholungstrainingseinheit (157, 257, 357) so konfiguriert ist, dass sie ein unüberwachtes Lernen am ersten Vorhersagemodell (142) erneut durchführt, wenn die Schätzeinheit (156, 256, 356) schätzt, dass die Leistung des ersten Vorhersagemodells (142) abgenommen hat.

7. Analysevorrichtung (100) nach Anspruch 1, wobei die Einheit für überwachtes Lernen (155, 255, 355) so konfiguriert ist, dass sie ein überwachtes Lernen an dem zweiten Vorhersagemodell (143) auf der Grundlage von normalen Daten, die vom ersten Vorhersagemodell (142) als normal bestimmt wurden, und auf der Grundlage der anomalen Daten aus der Vielzahl von bereits vorhandenen Daten, die während des Normalbetriebs des Zielsystems (50) erfasst wurden, durchführt.

8. Analysevorrichtung (100) nach Anspruch 1, wobei die Einheit für überwachtes Lernen (155, 255, 355) so konfiguriert ist, dass sie ein überwachtes Lernen an dem zweiten Vorhersagemodell (143) auf der Grundlage der Prozessdaten (5), die unmittelbar vor der Erfassung der anomalen Daten durch die Erfassungseinheit (153, 253, 353) beschafft wurden, und auf der Grundlage der anomalen Daten durchführt.

9. Analyseverfahren zum Analysieren von Prozessdaten (5) einer Anlage, wobei die Prozessdaten (5) sich auf eine Vielzahl von in der Anlage enthaltenen Feldgeräten beziehen, wobei das Analyseverfahren einen Computer veranlasst, einen Prozess auszuführen, der Folgendes umfasst:
Erfassen von anomalen Daten durch Echtzeit-Eingabe der Prozessdaten (5), die von einem die Anlage verwaltenden Zielsystem (50) beschafft werden, in ein erstes Vorhersagemodell (142), bei dem es sich um ein trainiertes Modell handelt, das einem unüberwachten Lernvorgang auf der Grundlage bereits vorhandener Daten unterzogen wurde, die während eines Normalbetriebs des Zielsystems (50) beschafft wurden, wobei das erste Vorhersagemodell (142) bei der Eingabe der Prozessdaten (5) einen Vorhersagewert ausgibt, wobei in einem Fall, in dem der Vorhersagewert gleich oder größer als ein Schwellenwert ist, bestimmt wird, dass es sich bei den eingegebenen Prozessdaten (5) um normale Daten handelt, und in einem Fall, in dem der Vorhersagewert kleiner als der Schwellenwert ist, bestimmt wird, dass es sich bei den eingegebenen Prozessdaten (5) um anomale Daten handelt;
Durchführen eines überwachten Lernens an einem zweiten Vorhersagemodell (143) auf der Grundlage der anomalen Daten und der bereits vorhandenen Daten;
Schätzen des ersten Vorhersagemodells (142) durch Eingabe von Prozessdaten in das zweite Vorhersagemodell (143), die mit den in das erste Vorhersagemodell (142) eingegebenen Prozessdaten (5) identisch sind, wobei die Prozessdaten mindestens einen der folgenden Werte umfassen: Druck, Temperatur oder Durchflussrate; und
erneutes Durchführen eines unüberwachten Lernens am ersten Vorhersagemodell (142) auf der Grundlage eines Schätzungsergebnisses.

10. Analyseprogramm zum Analysieren von Prozessdaten (5) einer Anlage, wobei die Prozessdaten (5) sich auf eine Vielzahl von in der Anlage enthaltenen Feldgeräten beziehen, wobei das Analyseprogramm einen Computer veranlasst, einen Prozess auszuführen, der Folgendes umfasst:
Erfassen von anomalen Daten durch Echtzeit-Eingabe der Prozessdaten (5), die von einem die Anlage verwaltenden Zielsystem (50) beschafft werden, in ein erstes Vorhersagemodell (142), bei dem es sich um ein trainiertes Modell handelt, das einem unüberwachten Lernvorgang auf der Grundlage bereits vorhandener Daten unterzogen wurde, die während eines Normalbetriebs des Zielsystems (50) beschafft wurden, wobei das erste Vorhersagemodell (142) bei der Eingabe der Prozessdaten (5) einen Vorhersagewert ausgibt, wobei in einem Fall, in dem der Vorhersagewert gleich oder größer als ein Schwellenwert ist, bestimmt wird, dass es sich bei den eingegebenen Prozessdaten (5) um normale Daten handelt, und in einem Fall, in dem der Vorhersagewert kleiner als der Schwellenwert ist, bestimmt wird, dass es sich bei den eingegebenen Prozessdaten (5) um anomale Daten handelt;
Durchführen eines überwachten Lernens an einem zweiten Vorhersagemodell (143) auf der Grundlage der anomalen Daten und der bereits vorhandenen Daten;
Schätzen des ersten Vorhersagemodells (142) durch Eingabe von Prozessdaten in das zweite Vorhersagemodell (143), die mit den in das erste Vorhersagemodell (142) eingegebenen Prozessdaten (5) identisch sind, wobei die Prozessdaten mindestens einen der folgenden Werte umfassen: Druck, Temperatur oder Durchflussrate; und
erneutes Durchführen eines unüberwachten Lernens am ersten Vorhersagemodell (142) auf der Grundlage eines Schätzungsergebnisses.

## Revendications

1. Appareil d'analyse (100) permettant d'analyser des données de processus (5) d'une installation, les données de processus (5) étant liées à une pluralité de dispositifs de terrain inclus dans l'installation, l'appareil d'analyse (100) comprenant :
une unité de détection (153, 253, 353) qui est configurée pour détecter des données anormales en entrant les données de processus (5) acquises en temps réel à partir d'un système cible (50) gérant l'installation dans un premier modèle de prédiction (142) qui est un modèle entraîné et qui a été soumis à un apprentissage non supervisé basé sur des données préexistantes acquises pendant un fonctionnement normal du système cible (50), dans lequel le premier modèle de prédiction (142) est configuré pour délivrer en sortie une valeur de prédiction lorsque les données de processus (5) sont entrées, dans lequel, dans un cas dans lequel la valeur de prédiction est égale ou supérieure à un seuil, il est déterminé que les données de processus d'entrée (5) sont des données normales, et dans un cas dans lequel la valeur de prédiction est inférieure au seuil, il est déterminé que les données de processus d'entrée (5) sont des données anormales ;
une unité d'apprentissage supervisé (155, 255, 355) qui est configurée pour effectuer un apprentissage supervisé sur un seconde modèle de prédiction (143) sur la base des données anormales et des données préexistantes ;
une unité d'estimation (156, 256, 356) qui est configurée pour estimer le premier modèle de prédiction (142) en entrant, dans le second modèle de prédiction (143), des données de processus identiques aux données de processus (5) qui ont été entrées dans le premier modèle de prédiction (142), dans lequel les données de processus incluent au moins un parmi une pression, une température ou un débit d'écoulement ; et
une unité de réentraînement (157, 257, 357) qui est configurée pour effectuer à nouveau un apprentissage non supervisé sur le premier modèle de prédiction (142) sur la base d'un résultat d'estimation obtenu par l'unité d'estimation (156, 256, 356).

2. Appareil d'analyse (100) selon la revendication 1, comprenant en outre une unité d'analyse factorielle (154, 254, 354) qui est configurée pour effectuer une analyse factorielle sur la base des données anormales et du premier modèle de prédiction (142).

3. Appareil d'analyse (100) selon la revendication 2, dans lequel
l'unité de détection (153, 253, 353) est en outre configurée pour calculer une valeur d'un indicateur de performance clé (KPI) d'installation sur la base des données de processus (5) acquises à partir du système cible (50), et
l'unité d'analyse factorielle (154, 254, 354) est configurée pour identifier, sur la base d'un résultat de prédiction du premier modèle de prédiction (142) ou du second modèle de prédiction (143) et sur la base de la valeur de l'indicateur de performance clé (KPI) d'installation, les données ciblées pour l'analyse factorielle parmi la pluralité de données de processus acquises à partir du système cible (50).

4. Appareil d'analyse (100) selon la revendication 1, dans lequel l'unité d'estimation (156, 256, 356) est configurée pour estimer le premier modèle de prédiction (142) sur la base d'un premier résultat de prédiction qui est délivré en sortie par le premier modèle de prédiction (142) lorsque les données de processus (5) sont entrées dans le premier modèle de prédiction (142), et sur la base d'un second résultat de prédiction qui est délivré en sortie par le second modèle de prédiction (143) lorsque les données qui sont les mêmes que les données de processus (5) qui ont été entrées dans le premier modèle de prédiction (142) sont entrées dans le second modèle de prédiction (143).

5. Appareil d'analyse (100) selon la revendication 4, dans lequel l'unité d'estimation (156, 256, 356) est configurée pour estimer le premier modèle de prédiction (142) sur la base du second résultat de prédiction qui est délivré en sortie par le second modèle de prédiction (143) lorsque les données de processus (5) qui ont été prédites comme des données anormales par le premier modèle de prédiction (142) sont entrées dans le second modèle de prédiction (143).

6. Appareil d'analyse (100) selon la revendication 5, dans lequel
l'unité d'estimation (156, 256, 356) est configurée pour estimer que la performance du premier modèle de prédiction (142) a diminué lorsque le premier résultat de prédiction et le second résultat de prédiction sont différents, et
l'unité de réentraînement (157, 257, 357) est configurée pour effectuer à nouveau un apprentissage non supervisé sur le premier modèle de prédiction (142) lorsque l'unité d'estimation (156, 256, 356) estime que la performance du premier modèle de prédiction (142) a diminué.

7. Appareil d'analyse (100) selon la revendication 1, dans lequel l'unité d'apprentissage supervisé (155, 255, 355) est configurée pour effectuer un apprentissage supervisé sur le second modèle de prédiction (143) sur la base de données normales qui ont été déterminées comme normales par le premier modèle de prédiction (142) et sur la base des données anormales parmi la pluralité de données préexistantes qui ont été acquises pendant le fonctionnement normal du système cible (50).

8. Appareil d'analyse (100) selon la revendication 1, dans lequel l'unité d'apprentissage supervisé (155, 255, 355) est configurée pour effectuer un apprentissage supervisé sur le second modèle de prédiction (143) sur la base des données de processus (5) acquises à partir du système cible (50) immédiatement avant la détection des données anormales par l'unité de détection (153, 253, 353), et sur la base des données anormales.

9. Procédé d'analyse permettant d'analyser des données de processus (5) d'une installation, les données de processus (5) étant liées à une pluralité de dispositifs de terrain inclus dans l'installation, le procédé d'analyse amenant un ordinateur à exécuter un processus comprenant :
la détection des données anormales en entrant en temps réel les données de processus (5) acquises à partir d'un système cible (50) gérant l'installation dans un premier modèle de prédiction (142) qui est un modèle entraîné et qui a été soumis à un apprentissage non supervisé basé sur des données préexistantes acquises pendant un fonctionnement normal du système cible (50), dans lequel le premier modèle de prédiction (142) délivre en sortie une valeur de prédiction lorsque les données de processus (5) sont entrées, dans lequel, dans un cas dans lequel la valeur de prédiction est égale ou supérieure à un seuil, il est déterminé que les données de processus d'entrée (5) sont des données normales, et dans un cas dans lequel la valeur de prédiction est inférieure au seuil, il est déterminé que les données de processus d'entrée (5) sont des données anormales ;
la réalisation d'un apprentissage supervisé sur un seconde modèle de prédiction (143) sur la base des données anormales et des données préexistantes ;
l'estimation du premier modèle de prédiction (142) en entrant, dans le second modèle de prédiction (143), des données de processus identiques aux données de processus (5) qui ont été entrées dans le premier modèle de prédiction (142), dans lequel les données de processus incluent au moins un parmi une pression, une température ou un débit d'écoulement ; et
la réalisation à nouveau d'un apprentissage non supervisé sur le premier modèle de prédiction (142) sur la base d'un résultat d'estimation.

10. Programme d'analyse permettant d'analyser des données de processus (5) d'une installation, les données de processus (5) étant liées à une pluralité de dispositifs de terrain inclus dans l'installation, le programme d'analyse amenant un ordinateur à exécuter un processus comprenant :
la détection des données anormales en entrant en temps réel les données de processus (5) acquises à partir d'un système cible (50) gérant l'installation dans un premier modèle de prédiction (142) qui est un modèle entraîné et qui a été soumis à un apprentissage non supervisé basé sur des données préexistantes acquises pendant un fonctionnement normal du système cible (50), dans lequel le premier modèle de prédiction (142) délivre en sortie une valeur de prédiction lorsque les données de processus (5) sont entrées, dans lequel, dans un cas dans lequel la valeur de prédiction est égale ou supérieure à un seuil, il est déterminé que les données de processus d'entrée (5) sont des données normales, et dans un cas dans lequel la valeur de prédiction est inférieure au seuil, il est déterminé que les données de processus d'entrée (5) sont des données anormales ;
la réalisation d'un apprentissage supervisé sur un second modèle de prédiction (143) sur la base des données anormales et des données préexistantes ;
l'estimation du premier modèle de prédiction (142) en entrant, dans le second modèle de prédiction (143), des données de processus identiques aux données de processus (5) qui ont été entrées dans le premier modèle de prédiction (142), dans lequel les données de processus incluent au moins un parmi une pression, une température ou un débit d'écoulement ; et
la réalisation à nouveau d'un apprentissage non supervisé sur le premier modèle de prédiction (142) sur la base d'un résultat d'estimation.
